(19) Europäisches Patentamt / European Patent Office / Office européen des brevets

(11) **EP 3 776 732 B1**

(12) **EUROPEAN PATENT SPECIFICATION**

(45) Date of publication and mention
of the grant of the patent:
**13.12.2023 Bulletin 2023/50**

(21) Application number: **19712785.5**

(22) Date of filing: **27.03.2019**

(51) International Patent Classification (IPC):
**H01Q 3/26** (2006.01)  **H01Q 19/06** (2006.01)
**H01Q 15/08** (2006.01)  **G01S 13/75** (2006.01)
**H01Q 1/32** (2006.01)  **H01Q 21/24** (2006.01)

(52) Cooperative Patent Classification (CPC):
**H01Q 3/2647; H01Q 3/2682; H01Q 15/08;**
**H01Q 19/062;** G01S 13/755; H01Q 1/3233;
H01Q 21/24

(86) International application number:
**PCT/EP2019/057662**

(87) International publication number:
**WO 2019/185676 (03.10.2019 Gazette 2019/40)**

(54) **APPARATUS SERVING AS RETRO-REFLECTIVE ELEMENT FOR ELECTROMAGNETIC WAVES, AND RADAR SYSTEM COMPRISING SUCH AN APPARATUS**

ALS RÜCKSTRAHLENDES ELEMENT FÜR ELEKTROMAGNETISCHE WELLEN DIENENDES GERÄT UND RADARSYSTEM MIT EINEM SOLCHEN GERÄT

APPAREIL SERVANT D'ÉLÉMENT RÉTRO-RÉFLÉCHISSANT D'ONDES ÉLECTROMAGNÉTIQUES, ET SYSTÈME RADAR COMPRENANT UN TEL APPAREIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2018 EP 18165029**

(43) Date of publication of application:
**17.02.2021 Bulletin 2021/07**

(73) Proprietor: **Damasia Holding GmbH**
**82387 Antdorf (DE)**

(72) Inventors:
• **HEUSCH, Christian**
**82387 Antdorf (DE)**
• **GOEBEL, Uhland**
**89250 senden (DE)**

(74) Representative: **Heusch, Christian**
**Ant-IP GmbH**
**Kirchplatz 2**
**82387 Antdorf (DE)**

(56) References cited:
**US-A- 5 223 839    US-A- 5 424 737**

• **C A Hacking ET AL: "Study and applications of retrodirective and self-adaptive electromagnetic wave controls to a Mars probe", Second Quarterly Report, SRI Project 5574, 1 February 1966 (1966-02-01), pages 1-99, XP055597446, Retrieved from the Internet: URL:https://ntrs.nasa.gov/archive/nasa/cas i.ntrs.nasa.gov/19670026043.pdf [retrieved on 2019-06-18]**

EP 3 776 732 B1

**Description**

The present invention concerns an apparatus serving as retro-reflective element for electromagnetic waves, in particular for electromagnetic radar waves, and a corresponding radar system comprising a vehicle with radar transceiver and such an apparatus.

Such a radar transceiver typically comprises at least one transmit antenna, one receive antenna, a building block for the waveform generation (as part of the transmitter), and a signal processing block (as part of the receiver) for the processing of received signals.

It is known in the art to use electromagnetic radar waves in connection with vehicles. There are numerous types of applications based on the use of electromagnetic radar waves emitted by a vehicle. Some examples are mentioned below.

Some modern vehicles use radar-based systems in connection with optical systems in order to monitor the street environment while the vehicle is moving. These systems are typically designed to assist the driver in difficult situations. In some cases, the systems are even able to directly interact with the vehicle, e.g. in order to intervene if a steering movement is regarded to be critical or to initiate an emergency braking in case of an imminent accident.

The behavior and capabilities of radar-based systems are very different if compared with optical systems, such as camera based optical systems. On the one hand, the different characteristics offer a number of unique features and, if combined with an optical system, even enable a smart extension of the vehicle's sensor technology and capabilities. Radar-based systems are for instance very well suited for harsh weather conditions.

On the other hand, it is difficult for the radar-based system as such, to reliably detect road signs, guide rails, crash barriers, curbsides, road markings, road construction sites, traffic lights, buildings and even more important other road users, such as pedestrians, bicycles, motor bikes, cars, trucks and the like. It is even more difficult for a radar-based system to reliably recognize any of these objects.

Most of these "objects" show a very weak reflection if sampled with the electromagnetic radar wave radiated by a vehicle. The radar wave signature of these objects is possible to be recognized but it requires quite some computing power and smart algorithms to process and analyze the reflected radar waves.

This has to do with the fact that these objects do have a very small and fluctuating radar cross section (RCS) and that there might be "disturbing" reflections. An object's RCS depends on the characteristics of the object (such as size, materials, geometry) and on the characteristics of the radar (frequency, polarization, orientation). The average RCS of a pedestrian is in the range between about - 8 dBsm and -10 dBsm in a 77 GHz frequency band (dBsm is the radar cross section of a target in decibels referred to a perfectly conducting sphere of 1 square meter equatorial cross section area). This is about 15 to 20 dB less than the reflection of the rear of a car. The RCS of a person on a bicycle was measured to be in the range between - 4 dBsm and - 5.2 dBsm. Persons and bicycles are thus difficult for a radar-based system to be detected and identified by the radar system of a car in an everyday traffic situation, for example.

It is also a controversial topic that vehicles, in order to be able to drive autonomously or semi-automatically, always need to know their exact current position. Civil global positioning system- (GPS-) based navigation systems, however, are not able to ensure a sufficient precision on a scale below 2 meters. Some solutions thus use a combination of GPS coordinates plus map data obtained from an on-board computer or from a central server. The map data are quite accurate and are able to inform the vehicle that 3 meters in front of the next crossing there should be a traffic sign on the right hand side, for example. The radar system of the vehicle is then able to detect this traffic sign and to relate its current position to the known position of the sign.

Some state of the art systems even combine camera, LIDAR (light detection and ranging), ultrasound and radar sensors (so-called sensor fusion) as well as (wireless / mobile) network-provided information in order to make the vehicle smarter and more reliable.

It is another issue which might have delayed the deployment of radar-based traffic systems that the various automotive companies are employing very different radar solutions in their vehicles. Under these circumstances, standardization is unlikely.

Different local preferences (e.g. in Europe compared to Japan) have lead to an adoption of different polarizations of the transmitted radar beams. While in Japan linear 45° polarization was preferred due to advantages regarding smaller multipath- and fading effects, linear vertical polarization (VP) was predominantly used in Europe due to easier antenna implementation. There is no trend towards any kind of standardization - despite, radar sensors of different brands as well as different sensors of the same brand are transmitting either in linear vertical, linear horizontal or 45° (tilted) linear polarization. Future radar sensors will use multiple electromagnetic (EM) field polarizations (e.g. for interference mitigation and/or polarimetric radar functions. Also circular polarization is an option for advanced future automotive radar.

It is known in the art to use Luneburg lenses for the processing of electromagnetic waves. For instance, the document "Radar reflecting pavement markers for vehicle automation", A. Voronov et al., publisher: Trafikverket, Borlänge, Sweden, date of publication: 2016, publication identifier: TRV 2015/97856, mentions the Luneburg lens as a possible radar reflector.

Such a Luneburg lens in theory has a first focal point which lies at infinity and a second focal point which lies at the opposite surface of the lens. In order to be able to provide for a respective beam shaping inside a Luneburg lens, it requires a refractive index *n* which decreases radially from the center to the outer surface. An ideal Luneburg lens has a dielectric constant ε = 2 at the center and a dielectric constant ε = 1 at the circumference. It is, however, impossible to provide a stable material with a dielectric constant ε = 1 which is suitable as outer layer of such a spherical lens.

The article by C. A. Hacking ET AL: "Study and applications of retrodirective and self-adaptive electromagnetic wave controls to a Mars probe", Second Quarterly Report, SRI Project 5574, Stanford Research Institute, February 1966, discloses a space probe with a retrodirective array and a cylindrical lens. The geodesic lens, disclosed in this article, features concentric metal surfaces. US 5 424 737 A discloses a retroreflector with a spherical Luneburg lens for road side marking. US 5 223 839 A discloses a retrodirective antenna array mounted on a spherical support.

It is thus an objective of the present invention to provide a solution which helps to improve vehicle-based radar systems and which makes the use of radar systems in vehicles more reliable and robust. In addition, it is an objective of the invention to offer a solution which could serve as common denominator for the various existing and future radar systems.

This object is being solved by an apparatus in accordance with claim 1 and a radar system in accordance with claim 14.

Advantageous improvements can be derived from the dependent claims and the below description.

In accordance with the present invention, an apparatus is provided which comprises

- a cylindrical element, designed as dielectric lens, having an inner longitudinal axis and comprising a dielectric material with an effective dielectric constant so as to provide for a focusing of an incident electromagnetic wave onto a focus region,
- a retrodirective antenna array comprising at least two antenna elements, said antenna array being positioned with an orientation parallel to said axis at or close to said focal region.

In accordance with the present invention, an apparatus is provided which comprises

- a cylindrical element, designed as dielectric lens, having an inner longitudinal axis and an effective dielectric constant which radially increases from an outer part of said cylindrical element towards said inner longitudinal axis, so as to provide for a focusing of an incident electromagnetic wave onto a focus region,
- and a retrodirective antenna array comprising at least two antenna elements, said antenna array being positioned with an orientation parallel to said central axis at or close to said cylindrical element.

In at least some embodiments, the apparatus comprises a combination of a cylindrical element and a retrodirective antenna array being designed and mounted so that an angular range of about 90 degrees is covered (herein referred to a Type 90 apparatus). Such a Type 90 apparatus has the advantage that it provides for a sharp angular cut-off and that is has a very uniform response inside the chosen sector.

In at least some embodiments, the apparatus comprises a cylindrical element which is designed as dielectric lens for electromagnetic radar waves. Preferably, the dielectric material of the dielectric lens is a low loss dielectric material which has a *tan δ* below 0.01 and a dielectric constant $\varepsilon_i$ in a range of 2.2 through 4.5.

In at least some embodiments, the apparatus comprises a cylindrical element which comprises a dielectric polystyrene material.

In at least some embodiments, the apparatus comprises a cylindrical element which comprises one or more of the following materials: PE, PP, PPS, PEI (Ultem®), Polymetylpenten (PMP, TPX).

In at least some embodiments, the cylindrical element is a gradient-index lens with an axial symmetry with respect to the axis (central cylinder axis).

In at least some embodiments, the cylindrical element is designed/manufactured so that it comprises an inhomogeneous (multi-shell or multi-layer) lens body, e.g. using pressed foam sheet material.

In at least some embodiments, the cylindrical element is designed/manufactured so as to achieve a birefringence-free operation, i.e. the local dielectric material properties of the cylindrical element do not depend on the E-field polarization or the wave propagation direction.

In at least some embodiments, the cylindrical element comprises a material serving as outermost layer which is designed as a quarter wavelength thick layer, so that electromagnetic waves within the frequency range of interest can pass in and out of the lens material without significant surface reflection.

In at least some embodiments, the cylindrical element is a lens having an effective refractive index which decreases radially from the inner longitudinal axis (central cylinder axis) towards the circumference.

In at least some embodiments, the cylindrical element comprises a self-focusing medium for electromagnetic waves in the radar wavelength regime.

In at least some embodiments, the cylindrical element is designed so that its focus is approximating a focus line extending parallel to the inner longitudinal axis (central cylinder axis) and that this focus line either is right at the circumferential surface or close to that surface, either inside or outside the cylindrical element.

In at least some embodiments, the cylindrical element has a refractive index variation which is designed so that a continuous and gradual wavefront transformation inside the cylindrical element takes place, when an incident electromagnetic radar wave is received through a front surface or aperture of the cylindrical element. The wavefront transformation provides for a concentration of the electromagnetic wave energy towards a focus line extending parallel to the inner longitudinal axis (central cylinder axis).

In at least some embodiments, the apparatus is designed so that it is able to effectively retrodirect electromagnetic radar waves emitted by the radar systems of vehicles of different car and radar sensor brands.

In at least some embodiments, the apparatus is designed so that it is able to retrodirect electromagnetic radar waves, independent of the polarization scheme. That is, the apparatus of these embodiments is designed so that it is able to handle at least two, or more than two different polarization schemes. In other words, the respective apparatus is designed to serve as a common denominator between the various radar systems.

In at least some embodiments, the apparatus shows a full duplex polarization behavior so as to be able to "respond" to the various radar wave polarization types being used by car manufacturers. It is an advantage of these embodiments, that the apparatus is able to provide a strong "answer" for all radar wave polarization types. That is, the apparatus of the respective embodiments is designed to handle all EM field polarization states.

In at least some embodiments, the apparatus provides for retro-reflective tags or retro-reflective beacons to be used for RCS augmentation and/or for impressing or embedding information onto/into returned automotive radar sensor signals. That is, the respective apparatus provides for a clear, dominating reflection which can be detected by all radars, independent of the wave polarization used.

In at least some embodiments, the apparatus is designed to support the complete 76GHz to 81GHz band.

In at least some embodiments, the retrodirective antenna array is designed so that is resends the incident electromagnetic wave toward where it comes from.

In at least some embodiments, the apparatus comprises an antenna array with antenna elements supporting two orthogonal, radiating resonant modes.

In at least some embodiments, the apparatus comprises two or more than two antenna array columns or rows. In this case, the mutual distance of adjacent columns or rows is kept small enough to avoid grading lobes and intermediate local minima of the radiated power. Preferably, the mutual center-distance is defined as follows: $\lambda/2 \leq P \leq 3\lambda/4$.

In at least some embodiments, each antenna element comprises one or more decoupling means (e.g. a stub, nose or notch) trimmed for sufficiently low cross-coupling between the ideally orthogonal radiation components.

In at least some embodiments, the retrodirective antenna array is comprised of antenna elements which are used to simultaneously receive and transmit radar waves. This can be achieved by exploiting the good isolation between orthogonally polarized ports of the antenna elements of the antenna array. In order for the transmission and reception to happen simultaneously, the retrodirective antenna array comprises pairs of antenna elements connected by reciprocal transmission lines. Therefore, the full array antenna area is used for both receive- and transmit-functions (highest achievable directivity and gain per unit area).

In at least some embodiments, the retrodirective antenna array is designed so that the re-directed electromagnetic wave energy is maximized. This maximization is independent of the varying and arbitrary incoming wave polarization.

In at least some embodiments, the retrodirective antenna array is designed so that it is able to receive two orthogonal field components at every antenna element and transport the energy via two independent transmission lines to the associated partner element (the element belonging to the same pair). If these transmission lines have identical delays, the coherent receive signals derived from the orthogonal components of the received electromagnetic wave re-compose into a coherently transmitted (re-directed) wave upon excitation of the partner element. This unique feature is herein referred to as full-duplex polarization support. An array with this feature shall be abbreviated FDRA (Full-Duplex Retrodirective Array) for the purpose of this document.

In at least some embodiments, the FDRA is designed so that it is able to either mimic an even number of subsequent (planar surface) reflections, an odd number, or to purposefully generate another state, e.g. by inserting a certain phase shift into one set of interconnecting transmission lines, compared to its orthogonal counterpart. A respective design of the FDRA enables a conversion of the polarization.

In at least some embodiments, the FDRA is designed for wide-band operation. I.e., the antenna array provides for a good impedance matching and it is well matched to the cylindrical element across a wide frequency band.

In at least some embodiments, the FDRA is designed so that it has a high isolation between orthogonal field components.

In at least some embodiments, the FDRA only comprises 1D- array configurations (i.e. single-row or single-column arrangements). Due to this it is possible to provide for a full-duplex transmission line routing with a planar, crossing-free topology.

The present invention is specifically designed for short range radar (SRR), medium range radar (MRR), and long range (LRR) applications, as for instance used in vehicles.

The present invention is well suited for use in connection with short range radar (SRR) in the range between 0,2m and about 80m.

The present invention is well suited for use in connection with medium range radar (MRR) in the range between 0,2m and about 160m, and long range (LRR) applications in the range between 1m and about 250m, as for instance used in vehicles.

The present invention is well suited for use in connection with the different vehicle-based radar systems which vary from manufacturer to manufacturer.

The present invention is well suited for use in connection with vehicle-based radar systems which use an FMCW modulation scheme (FMCW means Frequency Modulated Continuous-Wave) or which use fast chirp, pulse radar, MIMO-CDMA (Multiple-Input Multiple-Output Code-Division Multiple-Access), or FSK (Frequency Shift Keying).

The present invention has the potential to become a globally-accepted quasi standard for retro-reflective devices in traffic applications, since the apparatus of the invention is specifically designed for being able to interact with the majority of radar systems.

In at least some embodiments, the apparatus is designed as energy autonomous system. That is, the apparatus does not have to be powered from the outside.

If the apparatus of the invention comprises controllable/adjustable elements (as part of the antenna array), it can even be used in order to serve as vehicle to vehicle communication transponder, where each mobile platform or vehicle uses at least one radar sensor, illuminating at least a part of the other platform, which comprises a controllable retro-directive device as proposed herein. Such an apparatus will require a power supply, which is readily available within the mobile platform, and a digital communication interface to the respective onboard computer.

In at least some embodiments a retrodirective antenna array is employed which comprises controllable/adjustable elements, preferably reciprocal elements, as part of the transmission lines. This opens the possibility to modulate information onto the reflected radar signal.

In at least some embodiments a retrodirective antenna array is designed so as to provide for an amplitude modulation of the reflected radar signal or so as to provide for a phase modulation of the reflected radar signal.

In at least some embodiments a retrodirective antenna array is employed which comprises non-reciprocal elements, such as amplifiers.

In at least some embodiments a retrodirective antenna array is employed which comprises amplitude modulators (e.g. transmission-type pin modulators) or phase modulators.

In at least some embodiments a retrodirective antenna array is employed which comprises 2N antenna elements. In this case, each such antenna element comprises a dual-polarized radiator element with four ports or probes (herein referred to as ports), where two of these four ports are unused.

In those embodiments which comprise an even number of antenna elements (that is in all embodiments comprising 2N antenna elements), these antenna elements have a pairwise arrangement. That is, two antenna elements together form a pair, the ports of which are connected by transmission lines. In these 2N-antenna arrays, every antenna element has a counterpart at equal distance from the transversal centerline - and is connected to it with a pair of transmission lines. Each transmission line pair has the same combination of lengths/delays.

In the case of mirror symmetry of both antenna elements and connecting networks, a co-polar retro-reflection (uneven reflection order) applies to all linear polarization states of incident electromagnetic waves, if as additional requirement for this property, only ports associated with the same polarization state are mutually connected.

Further embodiments can be obtained by always connecting orthogonal ports - resulting in cross-polar response for incident +/-45° polarizations and circular polarization.

In at least some embodiments, the apparatus comprises a retrodirective antenna array with 2N dual-polarized radiator elements (herein referred to as DPR elements).

In at least some embodiments, at least one FDRA is used as retrodirective antenna array. This FDRA is either designed as antenna array with constant, i.e. time-invariant properties, or it is designed as an antenna array with controllable/adjustable elements.

In at least some embodiments, the FDRA comprises 2N antenna elements, e.g. 2N DPR elements, where each such antenna element has four ports. In connection with these embodiments, either the upper two or the lower two ports are being used and the respective other two unused ports are each left open. In connection with at least some of these embodiments, the unused ports (that is, the associated conductive structures) are even omitted.

An alternative port orientation (in-line and transverse to the array axis) is possible, and achieves a retro-directive operation with rotationally-symmetrical interconnect networks. This means, connected ports are always associated with orthogonal polarizations. In this case, a cross-polar response on linear horizontal and vertical polarizations is obtained, resembling a dihedral metal reflector in +45° or -45° orientations, respectively (even reflection order).

Another retro-directive array type with alternative port orientation (in-line and transverse to the array axis) is obtained by connecting pairs of ports associated with identical polarization states. In this case, a co-polar response is obtained for all linear polarization states (uneven reflection order).

In at least some embodiments, the FDRA comprises 2N antenna elements, e.g. 2N DPR elements, where each such antenna element comprises a suspended microstrip with a cavity bottom as ground plane. Preferably the microstrip has a ring structure with 1 wavelength circumferential length. It is an advantage of this ring structure with 1 wavelength circumferential length that it results in a λ/2 longitudinal resonance (similar to classical microstrip patch antenna), which can be effectively excited capacitively with a feed-port probe. The respective resonance field exhibits an approximate electrical symmetry plane.

In at least some embodiments, the FDRA comprises 2N antenna elements, e.g. 2N DPR elements, where each such antenna element has two ports in a line-symmetric arrangement with respect to the antenna element's center. In these embodiments, preferably each such antenna element comprises a ring structure being concentrically arranged with respect to the antenna element's center.

In those embodiments which comprise a ring structure, this ring structure is preferably designed so that the ring serves as resonance ring being excitable by an incident electromagnetic radar wave.

In those embodiments which comprise a ring structure, this ring structure is preferably situated above a cavity (cavity-backed arrangement). In these embodiments, preferably an air-filled cavity is employed.

In those embodiments which comprise a ring structure, this ring structure preferably comprises a stub or nose.

In those embodiments which comprise a ring structure and two ports or probes, these two ports or probes are designed so that they show a capacitive behavior in the radar wave frequency range.

In those embodiments which comprise an FDRA, each of the 2N antenna elements is used for simultaneously receiving and transmitting radar waves.

In at least some embodiments, at least one FDRA with 2N antenna elements, e.g. 2N DPR elements, is used as retrodirective antenna array. If the FDRA comprises 2N antenna elements, several of the individual antenna elements are arranged in a pairwise fashion, so as to provide a symmetric constellation with respect to a center plane of the retrodirective antenna array.

In those embodiments which have a symmetric constellation with respect to a center plane of the retrodirective antenna array, a line-symmetry is provided.

In at least some embodiments, at least one FDRA with 2N + 1 antenna elements, e.g. 2N + 1 DPR elements, is used as retrodirective antenna array. In those embodiments which comprise 2N + 1 antenna elements, one antenna element is situated at the center. In case of interconnect networks, which connect port pairs associated with orthogonal polarization states, the ports or probes of this one element at the center are mutually connected by a transmission line. Preferably, the propagation delay of this transmission line is identical to the propagation delay of those lines which connect pairs of the 2N antenna elements. In case of interconnect networks, which connect port pairs associated with identical polarization states, each of the ports of the one element at the center is loaded with an open- or short-circuit terminated transmission line of half the propagation delay (one-way).

In at least some embodiments, at least one FDRA is used as retrodirective antenna array which comprises controllable/adjustable elements in order to provide for a phase modulation of the radar wave.

In at least some embodiments, the FDRAs are realized on or in a multilayer structure.

In at least some embodiments, the FDRAs are realized by means of microstrip elements on or in a substrate (substrate integrated antenna arrays).

In at least some embodiments, the FDRAs are realized by means of substrate-integrated waveguides (SIW) and elements and delay lines of the FDRAs are realized by means of microstrip lines. In these embodiments, interfacing elements are used in order to couple the substrate-integrated waveguides and the microstrip lines.

In at least some embodiments, a high frequency substrate is used as part of the FDRAs.

In at least some embodiments, a flexible substrate is used for the FDRAs so as to be able to bend and mount the FDRAs in an equidistant position with respect to the circumferential surface of the cylindrical element.

In at least some embodiments, a metal backed substrate is used for the FDRAs.

In at least some embodiments, the FDRA is an array printed or laminated onto a substrate.

In at least some embodiments, the apparatus provides for features, signals or patterns that are well recognizable and distinguishable by the various radar systems used in vehicles.

The present invention can be used in order to enhance or enrich information which is provided by other sensors and systems of a vehicle. By means of data fusion in the digital domain, the digital information provided by the system disclosed herein can be combined with digital information provided by other on-board sensors and systems.

In at least some embodiments, the system disclosed herein is used in connection with a vehicle's cruise control and/or collision warning system and/or navigation system.

In at least some embodiments, the apparatus has a first aperture (acceptance angle) for receiving radar waves and a second aperture, which is smaller than the first aperture or equal to the first aperture and which is defined by the position of the antenna array relative to the cylindrical element. The first aperture or acceptance angle is mainly defined by the geometry and mounting of the cylindrical element, whereas the second aperture or acceptance angle, which is also called effective aperture or effective acceptance angle, is defined by the interaction of the cylindrical element and the antenna array.

In at least some embodiments, the apparatus has a radar cross section RCS of more than 10 square meters or at least 10 dBsm in logarithmic scale.

In at least some embodiments, the apparatus is designed so that it can be used in connection with one or more of the following systems or solutions:

- vehicular collision avoidance, and/or
- associated safety enhancement, and/or
- Adaptive Cruise Control (ACC), and/or
- Automatic Emergency Braking (AEB), and/or
- Blind Spot Detection & Alert, and/or
- Pedestrian Detection, and/or
- (front side/rear) Cross Traffic Alert, and/or
- Rear Collision Warning, just to mention some possible applications.

In at least some embodiments, the apparatus is used for lane detection and vehicle positioning, as for instance used in connection with automated and autonomous driving.

In at least some embodiments, the apparatus is used as retro-reflective pavement marker. Such a retro-reflective pavement marker comprises a cylindrical element with a horizontally oriented axis and it comprises at least one row of antenna elements, e.g. one row of DPR elements, representing an FDRA, as disclosed herein.

The present document offers an enabling technology for improved radar detection schemes in streets, on roads and close to streets and roads.

Further details and advantages will be described in the following by means of embodiments and with reference to the drawings.

Fig. 1A     shows a perspective view of a classical cylinder;
Fig. 1B     shows a horizontal cross-section of the cylinder of Fig. 1A;
Fig. 1C     shows a vertical cross-section of the cylinder of Fig. 1A;
Fig. 2A     shows a perspective view of an approximation of a classical cylinder, which in the present example has 12 facets (called dodecagon);
Fig. 2B     shows a horizontal cross-section of the dodecagon of Fig. 2A;
Fig. 2C     shows a vertical cross-section of the dodecagon of Fig. 2A;
Fig. 2D     shows a perspective view of a segment of a classical cylinder, which in the present example has a cutout or insection;
Fig. 2E     shows a horizontal cross-section of the cylindrical element of Fig. 2D;
Fig. 2F     shows a vertical cross-section of the cylindrical element of Fig. 2D;
Fig. 2G     shows a perspective view of another segment of a classical cylinder, which in the present example has one flat facet;
Fig. 2H     shows a horizontal cross-section of the cylindrical element of Fig. 2G;
Fig. 21     shows a vertical cross-section of the cylindrical element of Fig. 2G;
Fig. 23     shows a perspective view of another segment of a classical cylinder, which in the present example has two flat facets;

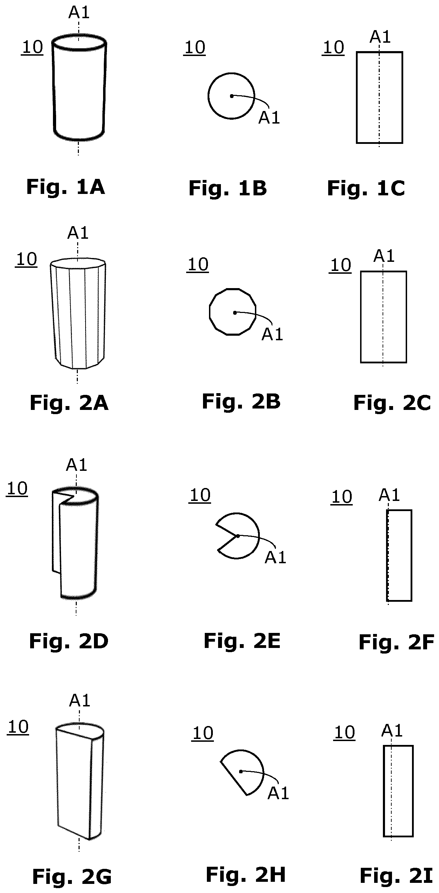

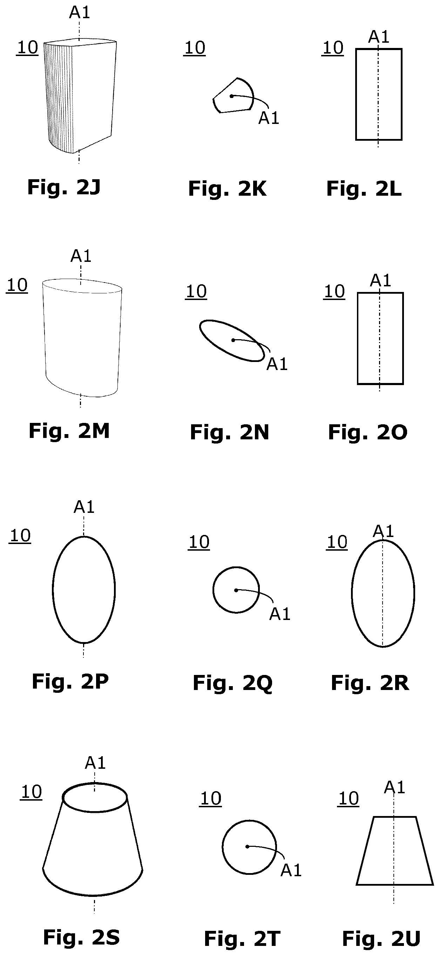

Fig. 2K     shows a horizontal cross-section of the cylindrical element of Fig. 2J;
Fig. 2L     shows a vertical cross-section of the cylindrical element of Fig. 2J;
Fig. 2M     shows a perspective view of a deformed classical cylinder;
Fig. 2N     shows a horizontal cross-section of the cylindrical element of Fig. 2M;
Fig. 2O     shows a vertical cross-section of the cylindrical element of Fig. 2M;
Fig. 2P     shows a perspective view of a deformed classical cylinder;
Fig. 2Q     shows a horizontal cross-section of the cylindrical element of Fig. 2P;
Fig. 2R     shows a vertical cross-section of the cylindrical element of Fig. 2P;
Fig. 2S     shows a perspective view of another deformed classical cylinder;
Fig. 2T     shows a horizontal cross-section of the cylindrical element of Fig. 2S;
Fig. 2U     shows a vertical cross-section of the cylindrical element of Fig. 2S;

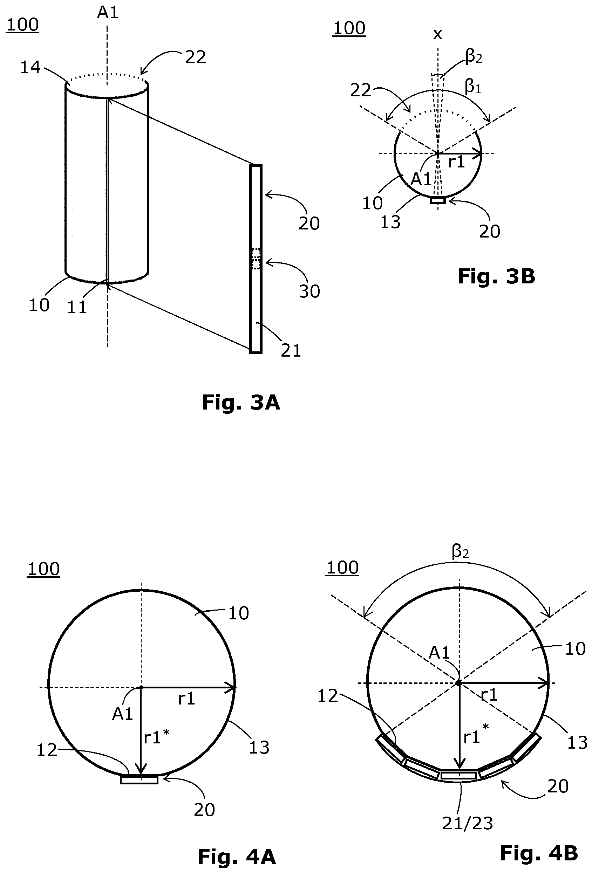

Fig. 3A     shows a schematic exploded view of a first possible embodiment of a cylindrical element and a strip-shaped retrodirective antenna array;
Fig. 3B     shows a schematic top view of the elements of Fig. 3A after they have been assembled;

**Fig. 4A**  shows a schematic top view of another embodiment of a cylindrical element with a flat area and a strip-shaped retrodirective antenna array mounted next to this flat area;

**Fig. 4B**  shows a schematic top view of another embodiment of a cylindrical element with five flat areas and one strip-shaped retrodirective antenna array mounted next to each of these flat areas;

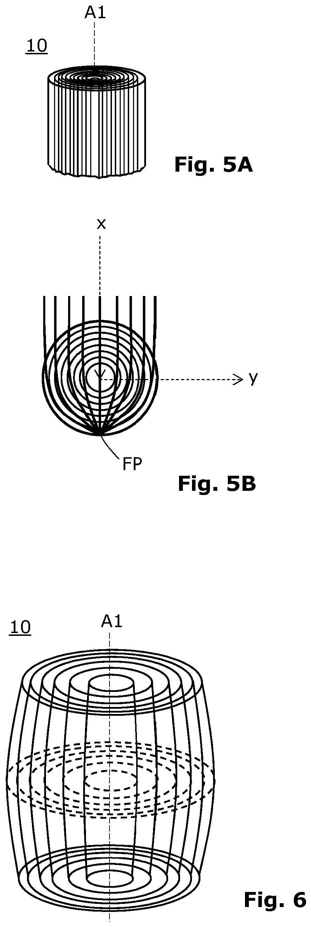

**Fig. 5A**  shows a schematic perspective view of another embodiment of a cylindrical element;

**Fig. 5B**  shows a schematic cross section of the embodiment of Fig. 5A;

**Fig. 6**  shows a schematic perspective view of another embodiment of a cylindrical element which has a drum shape;

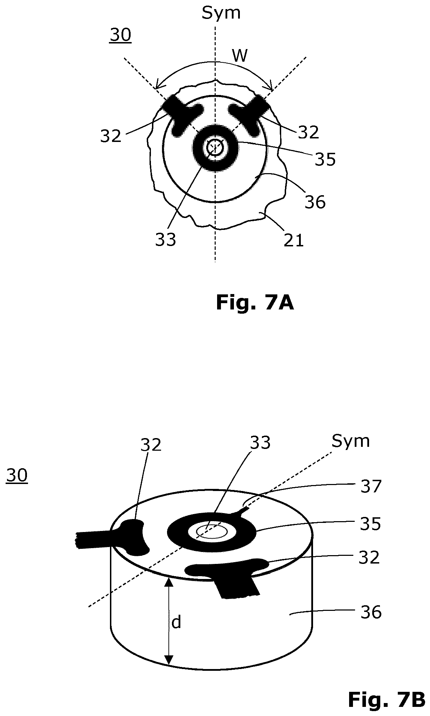

**Fig. 7A**  shows an enlarged view of one DPR embodiment of an FDRA embodiment;

**Fig. 7B**  shows an enlarged perspective, semi-transparent view of another DPR embodiment;

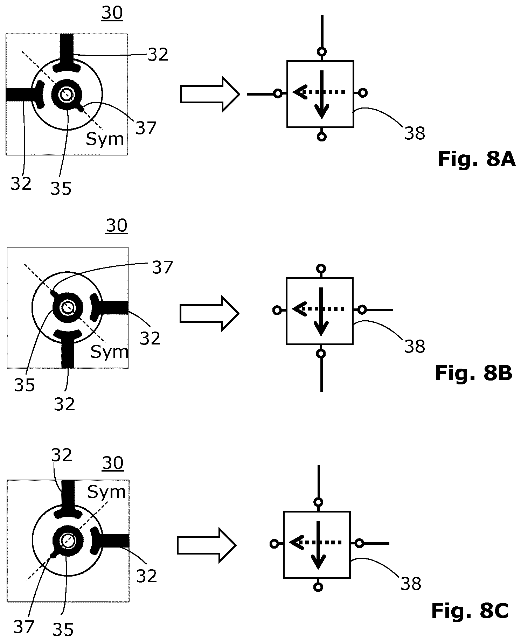

**Fig. 8A**  shows a schematic view of a DPR embodiment and an abstraction of this DPR element;

**Fig. 8B**  shows a schematic view of a DPR embodiment and an abstraction of this DPR element;

**Fig. 8C**  shows a schematic view of a DPR embodiment and an abstraction of this DPR element;

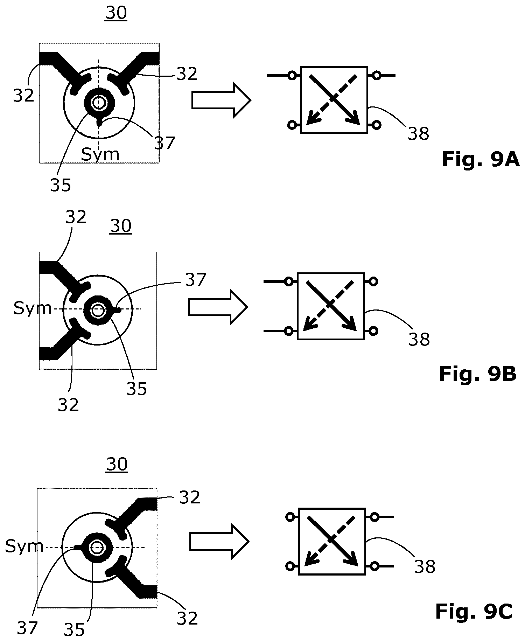

**Fig. 9A**  shows a schematic view of a DPR embodiment and an abstraction of this DPR element;

**Fig. 9B**  shows a schematic view of a DPR embodiment and an abstraction of this DPR element;

**Fig. 9C**  shows a schematic view of a DPR embodiment and an abstraction of this DPR element;

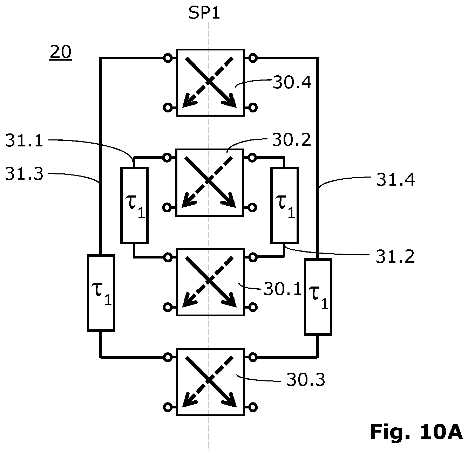

**Fig. 10A**  shows a schematic block diagram of an embodiment of a co-polar full-duplex 2N FDRA, with N = 2;

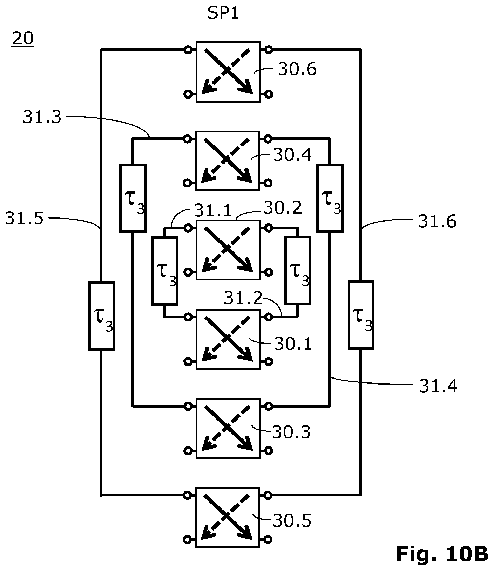

**Fig. 10B**  shows a schematic block diagram of another embodiment of a co-polar full-duplex 2N FDRA, with N = 3;

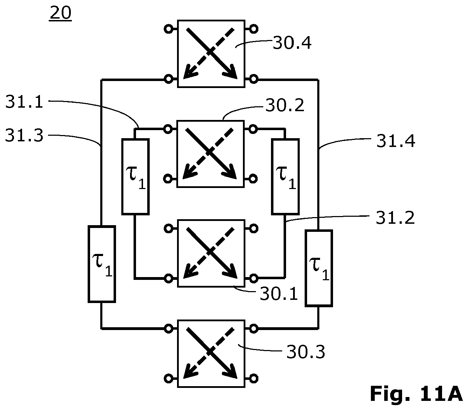

**Fig. 11A**  shows a schematic block diagram of an embodiment of a cross-polar retrodirective array with 2N FDRA, with N = 2;

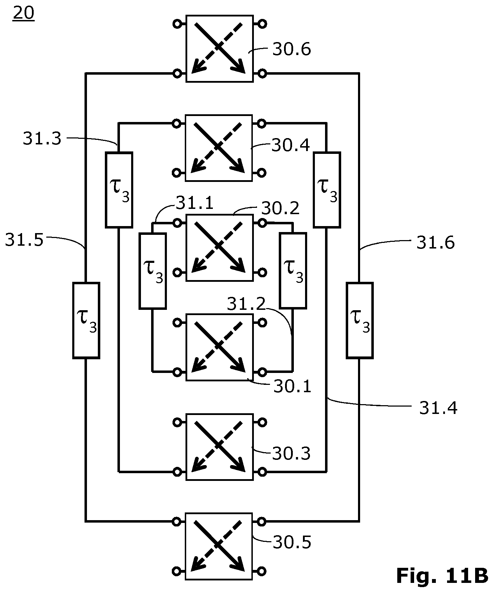

**Fig. 11B**  shows a schematic block diagram of an embodiment of a cross-polar retrodirective array with 2N FDRA, with N = 3;

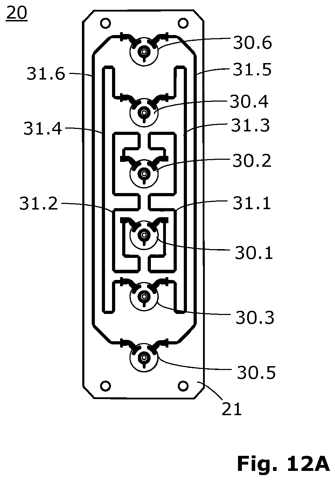

**Fig. 12A**  shows a schematic top view of an exemplary embodiment of a 2N FDRA, with N = 3, which is based on the block diagram of Fig. 10B;

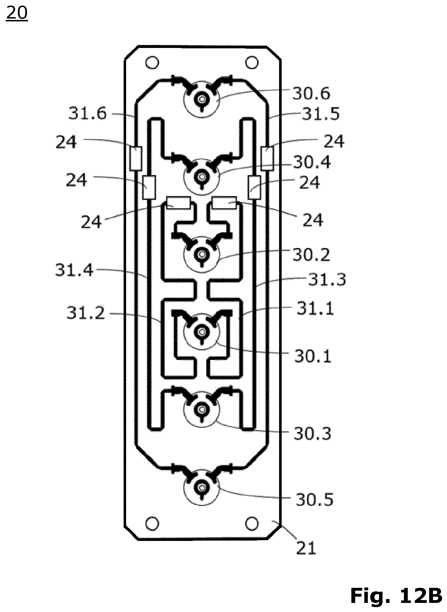

**Fig. 12B**  shows a schematic top view of another exemplary embodiment of a 2N FDRA, with N = 3, which here comprises a number of controllable/adjustable elements;

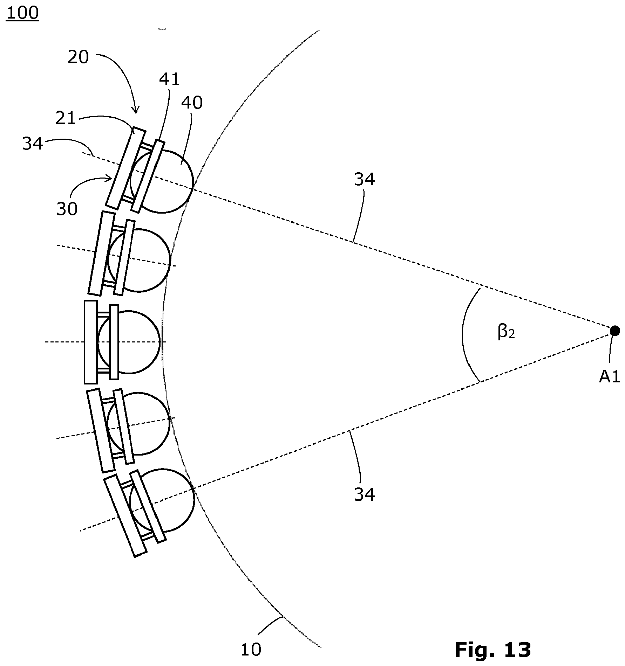

**Fig. 13**  shows a schematic top view of another exemplary embodiment which comprises five columns of antenna arrays and spherical coupling elements for an improved coupling of the antenna elements to the cylindrical element;

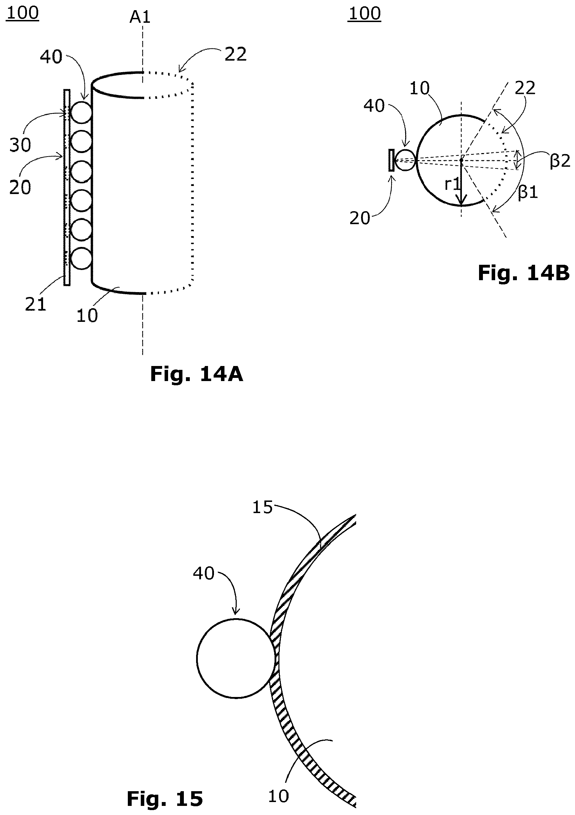

**Fig. 14A**  shows a schematic perspective view of another embodiment of a cylindrical element, a column of spherical elements, and a strip-shaped retrodirective antenna array;

**Fig. 14B**  shows a schematic top view of the embodiment of Fig. 14A;

**Fig. 15**  shows an enlarged schematic top view of a portion of another embodiment showing one spherical element mounted at a cylindrical element;

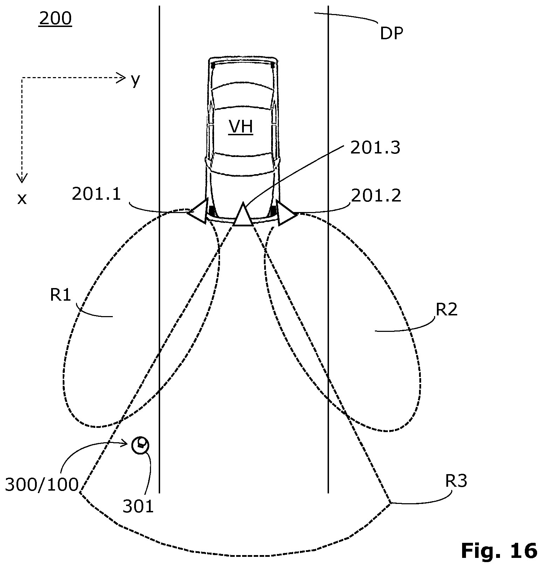

**Fig. 16**  shows a schematic top view of a radar system comprising a car driving on a road and a road-side installation with an apparatus as presented herein;

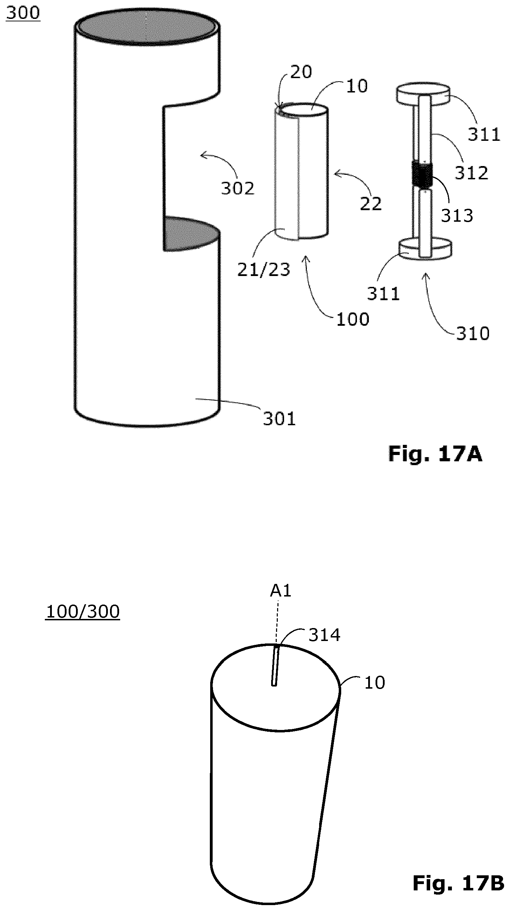

**Fig. 17A**  shows a schematic perspective exploded view of another embodiment of an apparatus as presented herein;

**Fig. 17B**  shows a schematic perspective view of another embodiment of an apparatus as presented herein;

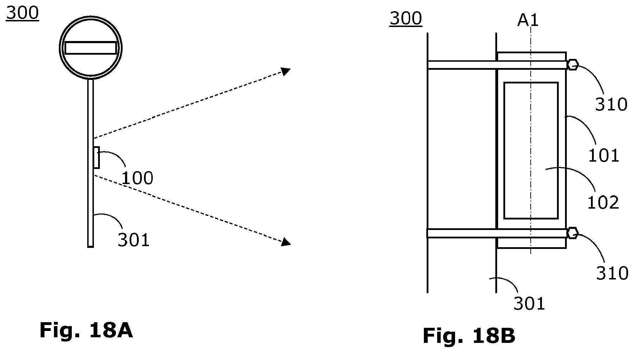

**Fig. 18A**  shows a schematic side view of another embodiment of an apparatus, as presented herein, which is attached to the pole of a traffic sign;

**Fig. 18B**  shows a schematic enlarged view of Fig. 18A;

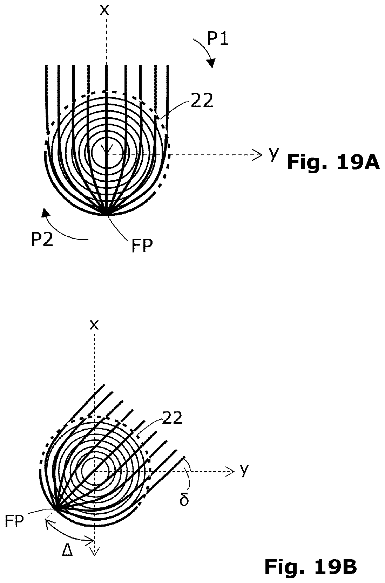

**Fig. 19A**  shows a schematic cross section of a cylindrical element in a first situation;

**Fig. 19B**  shows a schematic cross section of the cylindrical element of Fig. 19A in a second situation;

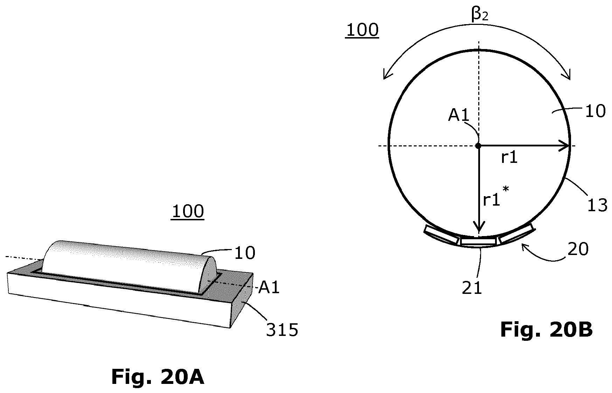

**Fig. 20A**  shows a schematic perspective view of an apparatus being integrated into the pavement of a road;

**Fig. 20B**  shows a schematic cross-section of an apparatus which is suitable for the integration into the pavement of a road;

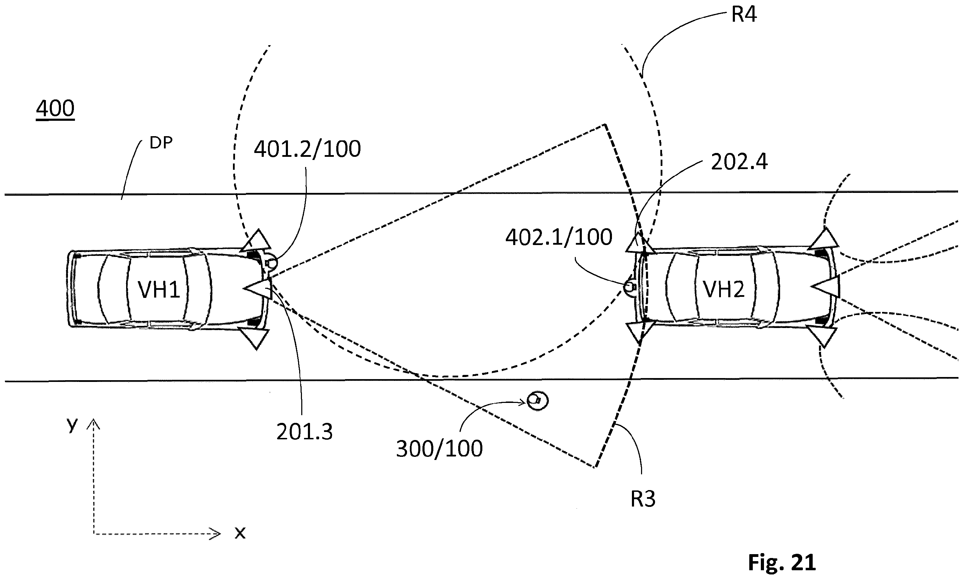

**Fig. 21**  shows a schematic top view of another radar system comprising two cars driving on a road and comprising an apparatus of the invention.

For the purposes of the present description and claims, a cylindrical element 10 is a 3-dimensional body which in some cases has a rotationally symmetric shape with respect to a center axis A1. In order to obtain such a body, a 2-dimensional plane is rotated around this center axis A1. This statement applies to the embodiment of Fig. 1A-1C, for example.

Not all embodiments do have a center axis A1 and not all embodiments of the cylindrical element 10 are rotationally symmetric with respect to a center axis A1. The respective axis is thus herein referred to as longitudinal axis A1.

In case of a classical cylinder (cf. Fig. 1A), the 2-dimensional plane has the shape of a rectangle (cf. Fig. 1C), the longitudinal axis A1 is identical with the center axis A1 and it cuts this rectangle in two equal halves and runs in parallel to two of the side edges of the rectangle. The cross-section of the classical cylinder at any level of the cylinder is a circle (cf. Fig. 1B).

For the purposes of the present document, a cylindrical element not necessarily is a classical cylinder. It is also possible to use modified 3-dimensional bodies which resemble the shape of a cylinder, which are approximation, variations, or modifications of a cylinder, or which are subdivisions or segments of a classical cylinder or of a variation or of a modification of a cylinder.

Figures 2A through 2C show an exemplary approximation of a classical cylinder. The respective 3-dimensional body of this cylindrical element 10 has a dodecagon as horizontal cross-section (cf. Fig. 2B) and a rectangle (cf. Fig. 2C) as vertical cross-section.

Variations or modifications of a cylinder can be obtained by deforming the 3-dimensional body of a classical cylinder or by deforming the 3-dimensional body of an approximation of a classical cylinder. The word deforming covers the compressing, stretching, distorting, bending, and bulging.

Figures 2D through 2F show an exemplary segment of a classical cylinder. The respective 3-dimensional body of this cylindrical element 10 has a circle as horizontal cross-section where a segment was removed (cf. Fig. 2E) and a narrow rectangle (cf. Fig. 2F) as vertical cross-section.

Figures 2G through 2I show another exemplary segment of a classical cylinder. The respective 3-dimensional body of this cylindrical element 10 has one flat facet or portion and a rectangle (cf. Fig. 2I) as vertical cross-section.

Figures 2J through 2L show another exemplary segment of a classical cylinder. The respective 3-dimensional body of this cylindrical element 10 has two flat facets or portions and a rectangle (cf. Fig. 2L) as vertical cross-section.

Figures 2M through 2O show an exemplary deformed classical cylinder. The respective 3-dimensional body of this cylindrical element 10 has an oval as horizontal cross-section (cf. Fig. 2N) and a rectangle (cf. Fig. 2O) as vertical cross-section.

Figures 2P through 2R show an exemplary deformed classical cylinder. The respective 3-dimensional body of this cylindrical element 10 has a circular horizontal cross-section (cf. Fig. 2Q) and an oval vertical cross-section (cf. Fig. 2R).

Figures 2S through 2U show another exemplary deformed classical cylinder (called truncated cone). The respective 3-dimensional body of this cylindrical element 10 has circular horizontal cross-sections on all levels (cf. Fig. 2T) and a trapezoid vertical cross-section (cf. Fig. 2R).

It is to be understood that any deviation from the ideal rotationally symmetric cylinder body effects the wave propagation and focusing properties. Such deviation(s) can be used in order to engineer the wave propagation and focusing properties. It is, for instance, possible to provide a cylindrical element 10 which has a focus region 11 inside the material of its body, to provide a cylindrical element 10 which has a focus region 11 right at the outer surface 13 of its body, or to provide a cylindrical element 10 which has a focus region 11 outside the material of its body. A cylindrical element 10 with a focus region 11 outside the material of its body can be calculated/designed by using a virtual lens radius, which is larger than r1.

A first embodiment is shown in Figures 3A and 3B. Fig. 3A shows an exploded view of the two basic components of an apparatus 100. The apparatus 100 comprises a cylindrical element 10 which has a central axis A1. The cylindrical element 10 in this example is based on Fig. 1A - 1C and it is essentially axially symmetrical with respect to the central axis A1. The cylindrical element 10 is provided with an effective dielectric constant $\varepsilon_i(r)$ which radially increases from an outer part of the cylindrical element 10 towards the central axis A1. The dielectric constant $\varepsilon_i(r)$ and the refractive index n are related to each other, as follows: $\varepsilon_i = n^2$. It is thus possible to convert the one into the other, if required.

In at least some embodiments, the dielectric constant $\varepsilon_i$ only shows horizontal variations, i.e. variations in a horizontal plane. In other words, the cylindrical body of the element 10 can be subdivided into a number of very thin hollow cylindrical skin layers. Each of these skin layers has a homogeneous dielectric constant $\varepsilon_i$ and each of these cylindrical skin layers has a different radius. The outermost skin layer has a dielectric constant $\varepsilon_{min}$ and a radius corresponding to the radius r1 (cf. Fig. 3B). The innermost skin layer has a dielectric constant $\varepsilon_{max}$ and a radius which is zero or almost zero. All skin layers are concentrically arranged around the center axis A1. Each of these skin layers has a different dielectric constant $\varepsilon_i$, that is $\varepsilon_{max} \neq \varepsilon_{min}$.

In at least some embodiments, the body of the cylindrical element 10 is an ideal cylinder (referred to as classical cylinder; cf. Fig. 1A through Fig. 1C). It is, however, also possible to employ a body which is an approximation, a variation, or a modification of a cylinder, or which is a subdivision or a segment of a classical cylinder or of a variation or of a modification of a cylinder, as discussed before.

It goes without saying, that all details which are herein described with a specific form of a cylindrical element 10 can be used in connection with the other cylindrical element 10, as well.

In addition to the cylindrical element 10, the apparatus 100 further comprises a retrodirective antenna array 20 comprising at least 2N antenna elements 30 with N being an integer number with N=1, 2, 3 and so forth. The embodiment of Fig. 3A, 3B shows a retrodirective antenna array 20 with two (N=1) antenna elements 30 being part of a single column. A single column (1D) antenna array 20 is used to retro-direct incoming waves in the vertical plane.

For fully covering a given angular sector in a horizontal plane (cf. effective far field acceptance angle $\beta_2$), several antenna array 20 columns can be combined (cf. Fig. 4B, for example). If several antenna array 20 columns are employed, their angular separation is best determined from the half-power beam width of the far field radiation produced by an individual array with collimation by the cylindrical lens element 10.

The two antenna elements 30 are schematically depicted in Fig. 3A. In the present example, they are situated on a strip-shaped carrier or backplane 21. The respective antenna array 20 is positioned with an orientation parallel to the axis A1 right at or close to the outer surface 13 of the cylindrical element 10. Fig. 3B shows the antenna array 20 mounted at the outer surface 13 of the cylindrical element 10.

In at least some embodiments, the strip-shaped carrier or backplane 21 is a flat element. It is, however, also within the scope of the present document to use a strip-shaped carrier or backplane 21 which has a non-flat shape (Fig. 4B shows a respective embodiment with an arc-shaped backplane 21).

In preferred embodiments, the non-flat shape is chosen so that the strip-shaped carrier or backplane 21 can be easily mounted or attached to a curved or facetted outer surface 13 of the element 10 (cf. Fig. 4B).

So far, various shapes and types of cylindrical elements 10 have been addressed. In the following, aspects regarding their fabrication are described.

In at least some embodiments, the cylindrical element 10 may have a coiled body. A coiled body, which is formed by winding up a flat strip, is for the purposes of the present document considered to be cylindrical body, too.

In at least some embodiments, the cylindrical element 10 may have a body which is assembled from thin skins, layers or shells. That is, a body which comprises a plurality of circular layers, stacked on each other, is considered to be cylindrical body, too.

It is not necessary for the body of the cylindrical element 10 to be made from a bulk material. It is also possible to provide a matrix, mesh, grid or honeycomb structure as building block of the body of the cylindrical element 10.

In at least some embodiments, the cylindrical element 10 is designed so that it provides for a linear focus region 11 at the outer surface 13 of the cylindrical element 10. The linear focus region 11 has a longitudinal direction extending parallel to the axis A1, as illustrated in Fig. 3A. It may have a width in the range between 1mm and a few centimeters. The linear focus region 11 of Fig. 3A is very narrow.

The cylindrical element 10 is not used as a waveguide where an electromagnetic wave is received via a plane end surface 14 (cf. Fig. 3A) so as to travel along the axis A1. In contrast, the electromagnetic wave is received via a curved circumferential surface (the respective surface is herein referred to as front face 22, cf. Fig. 3A and 3B) and caused to travel more or less horizontally (i.e. perpendicular to the axis A1) through the body of the cylindrical element 10.

In at least some embodiments, the cylindrical element 10 is designed so that it provides for a focal length which corresponds to the radius r1 of the cylindrical element 10. In other words, an electromagnetic wave, e.g. a radar wave, which enters the cylindrical element 10 at a front face 22, is focused onto the linear focus region 11 at the outer surface 13. In Fig. 3A and 3B, the dimension of the front face 22 is depicted by means of dashed curves. In the present example, the respective front face 22 receives plane waves in a horizontal sector delimited by acceptance angle $\beta_1$ of about 120 degrees. The effective far field acceptance angle $\beta_2$, which is mainly defined by the number, size and position of the antenna array 20 relative to the cylindrical element 10, is much smaller in the present example.

In at least some embodiments, the cylindrical element 10 is designed as Luneburg-type lens, with the requirement that for the purpose of the present document, the respective lens has a cylindrical and not the spherical shape of a classical Luneburg-lens. In addition to the cylindrical shape, the lenses, as used in the respective embodiments, do have a refractive index n which radially increases from the outside towards the axis A1, if one regards a cross-section perpendicular to the axis A1.

The variation of the refractive index n(r) of a Luneburg-type lens can be expressed by the following equation (1):

$$n(r) = \sqrt{\varepsilon_r} = \sqrt{2 - r^2} \quad (1)$$

In at least some other embodiments, the cylindrical element 10 is designed under the constraint to use a homogeneous, constant refractive index material. This may still result in an acceptable performance in the case of small cylindrical element 10 diameters (up to a few wavelengths in free air).

A cylindrical Luneburg-type lens 10 collects the incident planar wave across its illuminated surface (front face 22). When propagating through the gradient-index medium of the lens 10, the planar wavefront gradually transforms into a converging cylindrical wavefront, arriving in a "focus line" FL (also referred to by the reference number 11) parallel to the (inner) longitudinal axis A1. The highest power density is obtained at the focus line FL.

In at least some embodiments, the cylindrical element 10 is provided with at least one flat area 12, as illustrated in Fig. 4A. The flat area 12 extends parallel to the axis A1 and the flat area 12 of the embodiment of Fig. 4A is situated at the outer circumference 13 of the cylindrical element 10. The respective embodiment could be deemed to be a combination of the cylindrical elements 10 of Fig. 1A and 2A. The respective embodiment could be deemed to be a derivative of the cylindrical element 10 of Fig. 2G.

In at least some embodiments, the cylindrical element 10 is provided with several flat areas 12, as illustrated in Fig. 4B (the embodiment of Fig. 4B has five flat areas 12).

As illustrated in Fig. 4A and 4B, the flat area 12 enables an easier assembly of the cylindrical element 10 and the antenna array 20. The cylindrical elements 10 of Fig. 4A and 4B as such have a constant radius r1. In the vicinity of the flat area(s) 12, however, the radius is smaller. The respective shorter radius is herein referred to as radius r1*.

There are a number of technological processes available for the production of the Luneburg-type lens 10 and there is sufficient literature reporting about the various manufacturing approaches. It is for instance possible to use foam which is pressed so as to provide for the required variation of the refractive index n(r). Under certain conditions, a suitable (open-cell, plastically without too much destruction deformable) polymer-foam can be compressed to achieve permanent higher-than originally fabricated density and thereby higher permittivity. A mechanically produced thickness profile of a uniform density sheet is thus translated e.g. into a constant-thickness sheet exhibiting a step-wise or continual permittivity distribution. Details are disclosed in "Foam Based Luneburg Lens Antenna at 60 GHz", J. Bor et al., Progress In Electromagnetics Research Letters, Vol. 44, pages 1-7, 2014, for example.

In at least some embodiments, the cylindrical element 10 comprises a foam sheet material which is coiled so as to form a cylindrical body. During the coiling of the foam sheet material, the pressure is changed, so as to provide for the desired/required change of the permittivity as function of the radius r1. With increasing radius r1, the permittivity $\varepsilon_i(r)$ is reduced. In other words, the permittivity $\varepsilon_i(r)$ at or close to the axis A1 is greater than at the outer surface 13 of the cylindrical element 10. The higher the density of the foam sheet material is, the larger the permittivity $\varepsilon_i(r)$ gets.

In at least some embodiments, the cylindrical element 10 comprises a number of hollow cylindrical foam sheet elements, each of which has a different permittivity $\varepsilon_i(r)$ and each of which has a different radius. These hollow cylindrical foam sheet elements are coaxially arranged around the axis A1, so as to provide a layered cylindrical element 10.

Fig. 5A shows a perspective view of an upper part of a cylindrical element 10 which in this embodiment comprises multiple concentrically arranged hollow cylinder elements (thin skins or shells). Fig. 5B shows a cross section perpendicular to the axis A1 of a cylindrical element 10 comprising a number of concentrically arranged hollow cylinder elements. Concentrically arranged circles are used to show the changing refractive index (respectively the changing permittivity $\varepsilon_i(r)$) of these hollow cylinder elements. In Fig. 5B the wave propagation is shown in schematic form, depicted by quasi-optical rays. All parallel rays associated with an incident electromagnetic wave are internally deflected inside the cylindrical element 10 so that they are focused into a focal point FP. Since the cylindrical element 10 has a dimension parallel to the axis A1, the focal point FP is part of a focal line 11 (also called focus line FL), as mentioned in connection with Fig. 3A.

Depending on the chosen permittivity profile of the Luneburg-type lens 10, this focus line FL appears on the cylinder-lens surface 13, somewhat nearer to the lens axis or further outside.

As will be described below, the antenna array 20 is placed at a suitable position with respect to the cylindrical element 10 (preferably at or near the focus line FL). The optimum position of the antenna array 20 depends on the position of the phase center of the actual antenna element 30 used (patch-, ring-, slot- antenna). The best position can be found by full wave electromagnetic simulation, varying the radial position of the antenna array 20 slightly for maximum far field gain.

Fig. 6 shows a schematic perspective view of another embodiment of a cylindrical element 10 which has a drum shape (herein also referred to as truncated ellipsoid gradient lens). Such a drum shaped cylindrical element 10 could for example be obtained by modifying the cylindrical element 10 of Fig. 2P. A cross section of the drum shaped cylindrical element 10 perpendicular to the axis A1 comprises a number of concentrically arranged elements (like in Fig. 5B).

It is an advantage of the drum shaped cylindrical element 10 that it provides for a focusing function parallel to the axis A1. Whereas a classical cylinder (cf. Fig. 3A) has a focus line 11 which is as long as the length of the cylindrical element 10, the drum shaped cylindrical element 10 has a focus line 11 which is shorter. This means that the antenna array 20 may have fewer antenna elements 30, than the antenna array 20 of a classical cylinder element 10.

For applications in the radar regime, the apparatus 100 is specifically designed for use in the frequency range between 100MHz and 500GHz. Preferred embodiments are designed for electromagnetic radar waves in the frequency range between 50GHz and 90GHz. More specifically, the embodiments are designed for electromagnetic radar waves in the frequency range between 76GHz and 81GHz, so as to be able to employ the apparatus 100 in connection with current and future automotive radar systems. The worldwide harmonization trend is towards 77GHz to 81GHz (sometimes called 79GHz band) for wideband / high resolution MRR and SRR applications, due to smaller size and higher performance of the respective components as compared to 24GHz and 26 GHz frequency ranges. LRR will continue using the 76GHz to 77GHz range.

For applications in the radar regime, the apparatus 100 is specifically designed to show a full duplex polarization behavior. This means, that the apparatus 100 provides a strong "answer" for all radar wave polarization types. I.e., in at least some embodiments, the apparatus 100 shows a full duplex polarization behavior so as to be able to "respond" to the various radar wave polarization types being used by car manufacturers.

In at least some embodiments, the antenna array 20 comprises at least N=2 antenna elements 30 which are interconnected by means of transmission lines 31 (or transmission line networks) so as to be able to re-radiate electromagnetic radar waves received through the cylindrical element 10. Instead of using an antenna array 20 with an even number of antenna elements 30, it is also possible to use an antenna array 20 with 2N+1 antenna elements 30, as will be explained later.

In case of embodiments with 2N+1 antenna elements, the rotationally symmetrical interconnect networks are complemented by a self-connection of same delay time at the central element, between the two orthogonal ports.

In case of embodiments with 2N+1 antenna elements with mirror-symmetrical interconnect network, transmission line stubs of half length can be used to provide a reflected wave of proper delay to constructively contribute to the retro-directed radiation (open- or short-circuit termination with proper phase adjustment).

A common additional phase factor can be added to all interconnect lines of an individual FDRA, with respect to stacked further arrays (sharing the same axis) and with respect to lateral neighbor arrays.

In at least some embodiments, the antenna array 20 is designed so that it shows reciprocity. I.e., waves are able to propagate along the transmission lines of the interconnect network (simultaneously) in both directions, being subject to the same complex transmission factor. Thus, elements of the antenna array 20 are at the same time receiving and radiating electromagnetic radar waves.

An antenna element 30 is a basic building block of each antenna array 20. In all embodiments, the antenna elements 30 comprises a dual-polarized radiator element or antenna element with four ports (where unused ports are omitted or left open).

In the figures, dual-polarized radiator elements 30 are depicted which have four ports each, since an antenna element 30 with four ports represents the most general implementation. It is, however, possible to leave two ports (called unused ports) of the four ports open or to even omit the two unused ports, that is to eliminate the associated conductive structures.

Preferably, dual-polarized radiator (DPR) elements 30 in a pairwise arrangement are employed in order to obtain a retro-directive apparatus 100 for use in connection with radar applications. Fig. 3A shows a pairwise arrangement of two dual-polarized radiator elements 30 in a vertical arrangement (i.e., N=1). It is, however, also possible to horizontally arrange the two DPR elements 30 of a pair (provided the cylindrical element 10 is horizontally arranged, too).

For the purposes of the present document, a DPR element 30 is an electromagnetic reflector being designed for re-radiating an incident electromagnetic wave. These DPR elements are disposed in pairs with respect to a geometric center of the apparatus 100. Each DPR element 30 of the symmetrically disposed pairs of elements 30 is interconnected by separate transmissions lines 31. The electromagnetic path lengths of these transmissions lines are equal.

Details of one possible implementation of a DPR element 30 are shown in Fig. 7A. The element 30 in this example has a circular shape with a resonance ring 35 in the middle.

That is, a microstrip with a ring structure 35 is provided. This ring structure 35 has a circumferential length of 1 wavelength at the desired center frequency. It is an advantage of a ring structure 35 with 1 wavelength circumferential length that it results in a $\lambda/2$ longitudinal resonance (similar to classical microstrip patch antenna), which can be effectively excited capacitively with a feed-port probe 32. The respective resonance field exhibits an approximate electrical symmetry plane.

These capacitive probes 32 serve as radiator ports. Black elements represent structures which are electrically conductive. The DPR element 30 further comprises two probes 32 that are positioned at 90° rotated positions and are situated outside the circumference of the ring structure 35 (see the angle W in Fig. 7A). The DPR element 30 has an axis of symmetry Sym, as depicted in Fig. 7A.

In the example of the DPR embodiment depicted in Fig. 7A, the term "probe" is used for addressing a specific solution of exciting a radiator element with orthogonal resonance field orientations. The capacitive probe of this example fulfills the function as a microwave "port", which is a more suitable term when addressing the generalized aspects of a class of dual polarized radiators suitable for the construction of FDRAs. Also, it is used synonymously for addressing the accessible nodes of equivalent circuits or circuit blocks in this context. It goes without saying, that other dual polarized radiator types than cavity backed microstrip ring structures, for example a microstrip patch, a cavity-backed patch, two-fold mirror-symmetrical slot arrangements in one broadside conductor of substrate integrated waveguide and so on can be used as retrodirective array elements, following the teachings of this document. As an example for proper implementation, in the latter case of substrate integrated waveguide, the term "port" refers to a cross section of the radiator-feeding waveguides in equal distance from the radiator center (the intersection of symmetry planes), positioned at 90° rotated positions with respect to each other (applying the angle W of Fig. 7A). Also, the excitation of radiator-immanent resonators (which are supporting at least 2 orthogonal modes, according to the present disclosure), does not need to be capacitive, but can be inductive (e.g. by a series-inductance or short length of transmission line of high impedance or e.g. in case of substrate integrated waveguide formed by a shunt inductance) or even established by a direct connection.

If the probe 32 at the left hand side of Fig. 7A is excited by an electromagnetic wave, the other port 32 is isolated. Due to mutual capacitive coupling between the probes 32, the isolation is not 100%.

In preferred embodiments, a stub or nose 37 is provided at the ring structure 35, as illustrated in Fig. 7B. This stub or nose 37 is optional. If such a stub or nose 37 is provided, it is aligned with the axis of symmetry Sym and preferably pointing away from the probes 32.

A through-hole 33 can be arranged in the center of the element 30. This through-hole 33 extends through the carrier or backplane 21, which serves as substrate of the element 30. A dielectric substrate like Polyimide (Kapton® from DuPont), Liquid Crystal Polymer (LCP, e.g. from Rogers Corp.) or a low-loss high-Tg thermosetting material (like Astra®-MT77 from Isola group), can be used as carrier or backplane 21, for example. The circle in Fig. 7A indicates that there is a cavity 36 underneath the element 30.

The cavity 36 has a diameter, which is preferably chosen as to not resonate by itself within the operating frequency bandwidth. In case of a circular cavity, the cut-off frequency of the fundamental $TE_{11}$ mode $f_c = 1.841 * c_0/(\pi*D_c)$ shall be larger than $f_{max}$, the maximum operation frequency of interest. The chosen diameter $D_c$ can therefore also be kept small enough to fulfill the mutual radiator distance criteria for grating-lobe free operation of the FDRA.

The depth $d$ of the cavity 36 is not critical, but in preferred embodiments, the depth $d$ is at least 4 times the thickness of the substrate 21 (cf. Fig. 7B). Such a minimum depth $d$ ensures good radiation efficiency.

Since the air-filled cavity 36 below the suspended microstrip ring structure 35 dominates over the thin substrate dielectric, the wavelength along the ring circumference approximates free-space wavelength.

If desired, a coupling structure (e.g. a small dielectric sphere) can be placed between the cylindrical element 10 and the ring structure 35. The coupling structure provides for an improved coupling and the ring diameter can be reduced. The through hole 33 in the center of the element 30 in Fig. 7A can be used for perfectly centering and fixing such coupling structure with respect to the ring structure 35, e.g. by providing a small coaxial, cylindrical protrusion of fitting diameter on its rear face, which is oriented toward the ring structure.

The use of a coupling structure has the advantage that due to the strong and efficient coupling the mutual distance between the cylindrical element 10 and the ring structure 35 can be increased. The coupling structure can also be employed for providing a well-defined, symmetrical interface to the DPR element 30 (that is, in the reactive near field of the ring resonator) while the waves radiated by DPR element 30 towards the cylindrical element 10 can be matched to its focal point FP or focal line FL phase-plane curvature.

Fig. 7B shows a transparent perspective view of another DPR element 30. In contrast to the DPR element 30 of Fig. 7A, the resonance ring 35 of the DPR element 30 of Fig. 7B comprises a small nose 37 which essentially has a radial orientation with respect to the center of the element 30. This nose 37 provides for an improved decoupling between radiated fields excited by the first and the second probe 32. In other words, the quality of recomposition of radiated fields is improved (a better approximation to ideal orthogonality is achieved).

Fig. 8A - 8C and Fig. 9A - 9C show schematic top views of DPR elements 30 with ring structure 35, two ports 32 and with an optional stub or nose 37. On the right hand side of Fig. 8A - 8C and of Fig. 9A - 9C, the corresponding circuit blocks are shown. The lay-outs on the left show the two orthogonal capacitive probes 32, which are actually used. The circuit blocks on the right depict all four port locations, which might be used. The four ports are here symbolized by means of small lollipops sticking out of the box 38 which represents the antenna element 30. Only two out of four probe locations are actually used on the left hand side and thus only two ports 32 are connected on the right hand side. The arrows inside the box 38 depict the orientations of incident electrical fields which produce the maximum responses on the associated ports.

Ports on opposite sides of the box 38 excite the same ring resonator mode and have exactly the same delay with respect to incoming waves, but show a 180° phase difference. This can be used for even more simplified routing, besides the mitigation of signal crossings between interconnecting lines by the unilateral port excitation instead of a balanced one.

The DPR elements 30 of Fig. 8A - 8C are suitable for the direct excitation of vertical and horizontal polarizations. The DPR elements 30 of Fig. 9A - 9C are suitable for the handling of +45° and -45° polarizations. If the possible port locations are rotated by 45°, a very convenient variant for co-polar reflection of all linear polarizations is obtained (see for instance Fig. 9A).

Any polarization state of radiated fields (linear polarization of arbitrary orientation transversal to propagation direction, elliptical and circular left-handed and right-handed polarizations) can be produced by combining coherent excitations on the two ports of a DPR, with the correct phase- and amplitude ratio. A simple calculus translates excitation from an intrinsic vertical/horizontal polarization base to +45° /-45° polarization base. Important differences, however, result in the context of the invention from the overall orientation of the FDRA and the cooperating cylindrical element 10 with respect to incoming waves, and its relationship to the specific radar sensor of brand X, type Y employed radar wave polarization state (e.g. vertical polarization, horizontal polarization, +45° or -45°polarization). For achieving the desired, e.g. maximized, response to the specific radar type(s), certain interconnect circuit topologies and hence DPR element orientations may be preferable.

There is a remarkable difference between even order reflectors based on V/H orientation (cf. Fig. 8A - 8C) and those based on +/-45° port orientation (cf. Fig. 9A - 9C): the first show an equivalent reflection behavior with a slant (oriented at +/-45°) dihedral reflector, the second show an equivalent to an upright or horizontally oriented one.

The variants with excitation from the left side only (cf. Fig. 9B) and from the right side only (cf. Fig. 9C) play a role in some cross-polar (even order) reflector types.

Although both V/H- probe versions (cf. Fig. 8A - 8C) and +45°/-45° probe versions (cf. Fig. 9A - 9C) of antenna elements 30 can be used for co-polar retro-directional arrays 20, the latter is preferred due to a higher degree of symmetry and slightly shorter interconnect transmission lines. This might allow higher-count FDRAs.

In at least some embodiments, the antenna array 20 comprises 2N = 4 DPR elements 30.1, 30.2, 30.3, 30.4, as schematically illustrated in Fig. 10A. The two elements 30.1 and 30.2 form an inner pair and the two elements 30.3 and 30.4 form an outer pair. The transmission lines 31.1, 31.2 provide for an electromagnetic interconnection of the elements 30.1, 30.2, and the transmission lines 31.3, 31.4 provide for an electromagnetic interconnection of the elements 30.3, 30.4. As illustrated in Fig. 10A, each transmission line 31.1, 31.2, 31.3, 31.4 is characterized by a delay $\tau_1$. The antenna array 20 of Fig. 10A is designed for co-polar linear polarized retro-reflection. The design is completely mirror-symmetrical with respect to the line SP1. The cylindrical element 10 (not shown in Fig. 10A) provides for retro-reflection in the plane transversal to its axis (horizontal plane in the shown case).

There is a symmetry plane through line SP1 which is orthogonal with respect to the drawing plane of Fig. 10A. The symmetrical disposition of the elements/features of the DPR elements 30.1, 30.2, 30.3, 30.4 with respect to the symmetry plane SP1, in combination with the interconnect network comprised of delay lines 31.3, 31.2, 31.3, 31.4, which exhibit the same symmetry property, provides for utmost fidelity regarding reproduction of the polarization state of the incoming wave into the return path.

Thus, in at least some embodiments, the DPR elements of an antenna array 20 have a symmetrical disposition with respect to a symmetry plane or line SP1.

In at least some embodiments, the antenna array 20 comprises 2N = 6 DPR elements 30.1, 30.2, 30.3, 30.4, 30.5, 30.6, as schematically illustrated in Fig. 10B. The two elements 30.1 and 30.2 form a first inner pair; the two elements 30.3 and 30.4 form a second inner pair, and the two elements 30.5 and 30.6 form an outer pair. The transmission lines 31.1, 31.2 provide for an electromagnetic interconnection of the elements 30.1, 30.2, and the transmission lines 31.3, 31.4 provide for an electromagnetic interconnection of the elements 30.3, 30.4, and the transmission lines 31.5, 31.6 provide for an electromagnetic interconnection of the elements 30.5, 30.6. As illustrated in Fig. 10B, each transmission line 31.1, 31.2, 31.3, 31.4, 31.5, 31.6 is characterized by a delay $\tau_3$. The design is completely mirror-symmetrical with respect to the line SP1. The cylindrical element 10 provides for retro-reflection in the plane transversal to its axis (horizontal plane in the shown case).

As illustrated in Fig. 10B, in this particular embodiment only the upper pairs of ports of the elements 30.1, 30.2, 30.3, 30.4, 30.5, 30.6 are used, whereas the lower pairs of ports are left open (unused ports).

In at least some embodiments, the antenna array 20 comprises 2N = 4 DPR elements 30.1, 30.2, 30.3, 30.4, as schematically illustrated in Fig. 11A. The two elements 30.1 and 30.2 form an inner pair and the two elements 30.3 and 30.4 form an outer pair. The transmission lines 31.1, 31.2 provide for an electromagnetic interconnection of the elements 30.1, 30.2, and the transmission lines 31.3, 31.4 provide for an electromagnetic interconnection of the elements 30.3, 30.4. As illustrated in Fig. 11A, each transmission line 31.1, 31.2, 31.3, 31.4 is characterized by a delay $\tau_1$. The antenna array 20 of Fig. 11A is designed as cross-polar full-duplex array 20.

In at least some embodiments, the antenna array 20 comprises 2N = 6 DPR elements 30.1, 30.2, 30.3, 30.4, 30.5, 30.6, as schematically illustrated in Fig. 11B. The two elements 30.1 and 30.2 form a first inner pair; the two elements 30.3 and 30.4 form a second inner pair, and the two elements 30.5 and 30.6 form an outer pair. The transmission lines 31.1, 31.2 provide for an electromagnetic interconnection of the elements 30.1, 30.2, and the transmission lines 31.3, 31.4 provide for an electromagnetic interconnection of the elements 30.3, 30.4, and the transmission lines 31.5, 31.6 provide for an electromagnetic interconnection of the elements 30.5, 30.6. As illustrated in Fig. 11B, each transmission line 31.1, 31.2, 31.3, 31.4, 31.5, 31.6 is characterized by a delay $\tau_3$. The antenna array 20 of Fig. 11B is designed as cross-polar full-duplex array 20.

It is also possible to provide antenna arrays 20 which comprise 2N+1 = 5 DPR elements.

If desired, the respective delay $\tau_1$ can be made adjustable or it can be enhanced by an electronic group delay (e.g. by means of bandpass, high pass or low pass filters).

If desired, the respective delay $\tau_3$ can be made adjustable or it can be enhanced by an electronic group delay (e.g. by means of bandpass, high pass or low pass filters).

The respective delay $\tau_1$, $\tau_3$ can be designed by the provision of transmission lines which exactly have the desired path length in order to provide for the necessary propagation delays.

In at least some embodiments, fixed length waveguides are used to provide for the respective delay $\tau_1$, $\tau_3$. It is, however, also possible to employ tunable delay lines.

The antenna arrays 20 of Fig. 10A and 10B are designed so that they work with all linear polarizations, but these embodiments require a cross-polarized receiver at the vehicle side in case of circular polarization. In other words, the linear polarizations are reproduced by the antenna arrays 20, and a circular polarization is inverted by the antenna arrays 20 (it resembles an odd order reflection). That is, if one of the antenna arrays 20 of Fig. 10A or Fig. 10B receives a left hand circular polarized (LHCP) electromagnetic wave, it retrodirects a right hand circular polarized (RHCP) electromagnetic wave and vice versa.

The antenna arrays 20 of Fig. 11A and 11B are designed so that they work with vertical and horizontal linear polarizations as well as with circular polarizations. These embodiments do not require a cross-polarized receiver at the vehicle side in case of circular polarization. In other words, the vertical and horizontal linear polarizations are reproduced by the antenna arrays 20, and a circular polarization is reproduced, too. That is, if one of the antenna arrays 20 of Fig. 11A or Fig. 11B receives a left hand circular polarized (LHCP) electromagnetic wave, it retrodirects a left hand circular polarized (LHCP) electromagnetic wave.

The antenna arrays 20 of Fig. 11A and 11B do produce a cross-polar response on slant polarization. That is, if one of the antenna arrays 20 of Fig. 11A or Fig. 11B receives a -45° polarized E-field, it retrodirects a +45° polarized E-field.

The Figures 10A through 11B do show some basic embodiments of the antenna arrays 20. Other embodiments and circuit arrangements are possible, too. Depending on the embodiments and circuit arrangements, the array 20 will produce a phase shift (e.g. a 180° phase shift).

In at least some embodiments, the antenna array 20 comprises at least six DPR elements 30.1 through 30.6, as schematically illustrated in Fig. 12A. The design of this antenna array 20 is based on the block diagram of Fig. 10B. The two elements 30.1 and 30.2 form an inner pair, the two elements 30.3 and 30.4 form a second inner pair, and the two elements 30.5 and 30.6 form an outer pair. The transmissions lines 31.1 through 31.6 provide for an electromagnetic interconnection of the elements and they are designed so that they provide for a uniform delay $\tau_3$.

Fig. 12B shows a schematic top view of another exemplary embodiment of a 2N FDRA, with N = 3. This embodiment comprises a number of controllable/adjustable elements 24 which are depicted by means of small white rectangles. The controllable/adjustable elements 24 are integrated into the respective transmission lines 31.1 through 31.6. Varactor diodes can be used as controllable/adjustable elements 24, for example.

The varactor diodes can be used to provide for a phase shift of the electromagnetic waves before these are redirected back to the transceiver of a vehicle VH.

As mentioned, in all embodiments there might be a cavity 36 underneath some or all antenna elements 30. The respective DPR elements 30 are thus referred to as cavity-backed ring resonators.

At least some embodiments may comprise dielectric coupling elements 40 (e.g. spherical, ellipsoid, oval or rod-shaped elements), as depicted in Fig. 13. In these embodiments, the resonance ring 35 may comprise a circular shoulder to provide for a precisely defined seat of the coupling element 40.

Details of such an arrangement are provided in Fig. 13. In this Figure, a top view of an apparatus 100 with a cylindrical element 10 and with five antenna arrays 20 is shown. Each antenna element 30 of the antenna arrays 20 comprises a spherical coupling element 40. Each such element 40 is mounted by a mounting element 41 carried by the carrier or backplane 21. The spherical element 40 might be positioned on the resonance ring 35 so that a small lower portion of the element 40 protrudes into a through-hole 33 of the carrier or backplane 21. It is, however, also possible to provide for a butt-coupling of the lens element 40 and the resonance ring 35.

Fig. 13 also shows that the elements 40 can be positioned so that they touch the circumference of the cylindrical element 10. It is also possible to position the elements 40 so that they protrude into the body of the cylindrical element 10. A respective embodiment is illustrated in Fig. 15. As one can see in Fig. 15, the cylindrical element 10 may comprise an outer layer or coating 15.

The elements 40 are optional. If such elements 40 are used, the material of these elements 40 is chosen so that they provide for an efficient coupling of the radar wave from a position at or near the focus line or region 11 into the resonance ring 35. In order to be able to provide for an efficient coupling, each element 40 has to be precisely positioned with respect to the resonance ring 35.

It is an advantage of embodiments comprising elements 40, that due to the very efficient coupling between the cylindrical element 10 and the respective antenna elements 30, the size of the resonance rings 35 of the antenna elements 30 can be relatively small.

In at least some embodiments, a dielectric material is used for the coupling elements 40 so that the respective elements 40 are able to serve as waveguides for coupling/guiding the electromagnetic radar wave from the cylindrical element 10 into the resonance rings 35 and vice versa.

Another embodiment of the invention is shown in Figures 14A and 14B. Fig. 14A shows a perspective view of the basic components of an apparatus 100. The apparatus 100 comprises a cylindrical element 10 which has a central (inner) longitudinal axis A1. It furthermore comprises a 1-column antenna array 20 which is situated near the cylindrical element 10. In order to provide for a more efficient electromagnetic coupling between the individual antenna elements 30 of the antenna array 20 and the cylindrical element 10, there is a column of coupling elements 40. The column of coupling elements 40 is designed and mounted so that one spherical coupling element 40 per antenna element 30 is provided. Fig. 14B shows a top view of the embodiment of Fig. 14A.

Due to the fact that only one column of coupling elements 40 and one column of antenna elements 30 are provided, the effective far field acceptance angle $\beta_2$ is smaller than the overall acceptance angle $\beta_1$ of the cylindrical element 10 as such.

The embodiment of Fig. 13, which was described before, has an effective far field acceptance angle $\beta_2$ which is defined by the segment of the circumference of the cylindrical element 10 which is covered with antenna arrays 20. Each antenna element 30 has an optical axis 34 which is arranged so that it points towards the (inner) longitudinal axis A1. All optical axes 34 have a common point of intersection right at this axis A1. If the cylindrical element 10 is a classical cylinder, the two outer optical axes 34 of Fig. 13 define the effective acceptance angle $\beta_2$.

The present document also concerns radar systems 200, also referred to as overall systems, which comprise at least one apparatus 100 and one radar transceiver 201.1. The apparatus 100 can be deployed in a stationary mode, e.g. next to a drive path DP, such as a road. An example is shown in Fig. 16. However, the apparatus 100 can also be used as part of a vehicle VH (e.g. a construction vehicle, ambulance or police car, or a regular vehicle) or as part of a mobile barrier (for instance to be positioned on a road in order to fence off a construction site).

Such a radar system 200, as shown by means of an example in Fig. 16, might comprise in at least some embodiments at least one vehicle-mounted radar transceiver 201.1, 201.2, 201.3 designed for emitting an electromagnetic radar wave. Fig. 16 shows a car VH with three radar transceivers 201.1, 201.2, 201.3. These transceivers 201.1, 201.2, 201.3 are here symbolized by small triangles. The two transceivers 201.1 and 201.2 are designed for sending out electromagnetic radar waves R1, R2 into outward tilted beams (e.g. for the detection of crossing traffic and/or roadside objects). In the present example, there is also a transceiver 201.3 in a center position. This transceiver 201.3 transmits a radar wave R3 into a forward directed, longer reaching beam.

As mentioned before, the radar system 200 further comprises at least one apparatus 100 (that is one electromagnetic retro-reflector 100). In the present example, this apparatus 100 is positioned at or near a drive path DP. This electromagnetic retro-reflector 100 here comprises a cylindrical lens 10 being positioned with a vertically oriented axis A1, and at least one antenna array 20 with at least two antenna elements 30.1, 30.2 being situated at a reverse side of the cylindrical lens 10. The apparatus 100 of Fig. 16 is integrated into a fixed roadside installation 300 (e.g. the post 301 of a traffic sign).

The retro-reflector 100 is designed and mounted so that the radar wave R1, R2 or R3, emitted by the transceivers 201.1 201.2 or 201.3, hits the cylindrical lens 10 at a front face 22. In Fig. 19A the respective front face 22 is depicted by a dashed segment of the outer circumference of the cylindrical element 10. From there the radar wave travels through the "body" of the cylindrical element 10 while being focused onto a longitudinal focus region 11 at the reverse side (cf. the focus point FP in Fig. 19A). The respective antenna array 20 (not shown) of the apparatus 100 of Fig. 16 is designed as a retrodirective antenna which reflects the radar wave, received via the focus region 11, back into the cylindrical element 10 and from there back towards the transceiver(s) 201.1, 201.2 or 201.3.

Fig. 16 shows on the left hand side a cross-section of a hollow post 301. Inside this post 301 there is a retro-reflector 100. Details of a possible mounting arrangement are provided in Fig. 17A. This Fig. 17A shows an exploded view of a short length of a pole 301 with a cutout 302 at one side. There is one retro-reflector 100 shown next to this cutout 302. This retro-reflector 100 comprises at least one cylindrical element 10 with a front face 22. At the reverse side of this cylindrical element 10 there are a number of antenna arrays 20 each comprising a column with 2N or 2N+1 antenna elements 30. In order to support these antenna elements 30, there is an arc-shaped carrier 23 or backplane 21. The antenna elements 30 are situated between this carrier 23 or backplane 21 and the cylindrical element 10.

In order to mount the retro-reflector 100 inside the hollow post 301, a mounting gear 310 might be used. This mounting gear 310 for instance comprises two circular end plates 311. These end plates 311 are designed so that they are able to carry the cylindrical lens 10 together with the antenna arrays 20 and carrier 23 or backplane 21. In the present example, the end plates 311 are connected by rods, levers or wires 312. In order to provide for a certain tension for the clamping of the retro-reflector 100, springs 313, as illustrated in Fig. 17A, or other elastic elements or a combination of a screw and nut could be used.

With the retro-reflector 100 being held in place between the end plates 311 of the mounting gear 310, the overall arrangement can be inserted into the hollow post 301. Inside the post 301, the retro-reflector 100 can be secured by means of screws, tapes, glue, clamps and/or other means.

Fig. 17B shows another retro-reflector 100 (the antenna elements 30 are not depicted). The cylindrical element 10 comprises a thin shaft or pin 314, as illustrated in Fig. 17B. The shaft or pin 314 can be used for mounting the retro-reflector 100.

In order to mount the retro-reflector 100 outside of the pole 301 of a traffic sign, for example, hose clamps might be used as mounting gear 310, as schematically illustrated in Fig. 18A and 18B. The apparatus 100 in this case might be situated inside a hollow cylindrical housing 101 which has a window 102 (e.g. a window 102 covered with a radome film). The cylindrical element 10 is situated right behind this window 102 in an upright orientation so that the axis A1 is vertically aligned.

Instead of using hose clamps, other mounting gear 310 can be used.

The apparatus 100 can also be attached to the outside of a reflector post or delineator post, which are typically situated at the road side in an exactly defined distance with respect to each other. It is also possible to integrate the apparatus 100 into such a reflector or delineator post.

Depending on the actual implementation, the total angular range might be in the range from -45° through 45° degrees, i.e. the effective acceptance angle $\beta_2$ of the apparatus 100 should cover 90° (herein referred to a Type 90 apparatus). There are, however, situations where a smaller or wider effective acceptance angle $\beta_2$ of the apparatus 100 is required.

In at least some embodiments, the apparatus 100 is designed so that it has an acceptance angle of 120° (see for instance Figures 19A and 19B). In some embodiments, it might be sufficient for the apparatus 100 to have an aperture of 90°, as mentioned above. It is, however, also possible to provide embodiments of the apparatus 100 which have a much smaller aperture (e.g. an effective aperture of 45°).

In at least some embodiments, the apparatus 100 is designed so that it has a first acceptance angle range (e.g. covering a range of 90°) plus a second acceptance angle range (e.g. covering a range of 10°). In such an embodiment, the first angular range is used for remote vehicles VH at a distance between 100m and 20m, for example, whereas the second angular range is used for a short period of time while the vehicle VH is driving past the apparatus 100. For a "communication" within the second angular range, a short range side radar transceiver of the vehicle VH might be used.

Referring to figures 19A and 19B we shall now describe further aspects of some of the embodiments of the invention. As a vehicle VH carrying the radar transceiver (e.g. the transceiver 201.1) is approaching a post 301 equipped with an apparatus 100 along a straight drive path DP, as illustrated in Fig. 16, the radar waves are hitting the cylindrical element 10 of the apparatus 100 more or less with a direction of propagation parallel to the x-axis of the x-y coordinate system. This situation is schematically depicted in Fig. 19A assuming that the distance between the radar transceiver (e.g. the transceiver 201.1) and the apparatus 100 is beyond 50m.

If the cylindrical element 10 is a gradient lens having an effective dielectric constant $\varepsilon_i(r)$ which radially increases from an outer part of the cylindrical element 10 towards the axis A1, all parallel rays are focused onto a focus point FP in the cross-section of Fig. 19A (or focus line or region 11 if one takes into consideration that the cylindrical element 10 has a linear extension parallel to the axis A1). The focus point FP in this case is at a 6'o clock position if the circumference of the cylindrical element 10 is considered to be a clock face.

There is a curved arrow P1 in Fig. 19A which is used to schematically symbolize that the vehicle VH is moving around the cylindrical element 10 if the vehicle VH is approaching the apparatus 100 (in this case the movement of the vehicle VH in parallel to the x-axis is neglected). The curved arrow P2 symbolizes that at the same time the focus point FP, line or region 11 is moving in the same sense around the cylinder axis A1.

In Fig. 19B the vehicle VH has moved to a point where a 45° angle between the rays and the x-axis is reached. The angle $\delta$ in this case is 45°, too.

In those embodiments which are designed to cover an angular range, as depicted in Fig. 19A and 19B, the antenna array 20 is designed and mounted so that it covers at least the angular range $\Delta$.

If an apparatus 100 is to be provided that reflects radar waves only in a small range of 45° ± 10°, for example, it is sufficient to equip the cylindrical element 10 with antenna arrays 20 in the respective angular range $\Delta$ on its reverse side. The wider the angular operating range or the effective acceptance angle $\beta_2$, the more (columns of) antenna arrays 20 are mounted at the reverse side of the cylindrical element 10.

An apparatus 100, as depicted in Figures 3A and 3B, is designed to effectively reflect radar waves only in a narrow angular operating range of $\pm 2^0$ around the direction of the x-axis, for example. An apparatus 100, as depicted in Fig. 4B is designed to effectively reflect radar waves in an angular range of $\pm 50^0$ around the direction of the x-axis, for example. The effective acceptance range is in this case defined by the angle $\beta_2=100^0$.

In at least some embodiments, an apparatus 100 with a horizontally oriented axis A1 can be installed on a vehicle VH (e.g. at the rear side of a vehicle VH2) as shown in Fig. 21 as 402.1/100. The cylindrical elements 10 of these kinds of embodiments do not need to be gradient index lenses. The respective embodiments can be equipped with a cylindrical element being designed as dielectric lens, having an inner longitudinal axis and comprising a dielectric material with an effective dielectric constant so as to provide for a focusing of an incident electromagnetic wave onto a focus region.

As can be further seen in Fig. 21, the following vehicle VH1 can be equipped with an equivalent apparatus 401.2/100 somewhere at its front side. This will retro-reflect radar signals that are sent out by one of the rear-looking radar sensors (e.g. 202.4) of vehicle VH2, which is driving in front. With such use of retro-reflective transponders 100 of the invention, the communication loop can be closed and a bi-directional exchange of information between on-board computers of the vehicles VH1 and VH2, respectively achieved. This is possible on the grounds of very rudimentary standardization of signals in the digital regime, despite possibly completely different radar sensor frequency channels, polarization or wave formats of the radar sensors involved. Thus, an apparatus 100 of the invention, used as retroreflective (controllable) transponder, is a common denominator for bridging the gaps between existing heterogeneous radar technologies.

In at least some embodiments, which are designed for use in connection with a bi-directional exchange of information between on-board computers of the vehicles VH1 and VH2, the apparatus 100 may comprise at least one FDRA which has a number of controllable elements 24. These controllable elements 24 are used to dynamically impress information onto the retro-reflected signal, which was sent out e.g. by radar sensor 201.3 of the following vehicle VH1.

Irrespective of the polarization format, frequency range, waveform etc. used by radar sensor 201.3, important and/or urgent information can be conveyed from vehicle VH2 to vehicle VH1, e.g. signaling a just initiated emergency braking action. Minimum delay for detection and action to such dangerous situation can be achieved by 1) not waiting until a measurable deceleration is detected by the regular radar sensor of vehicle VH1, and 2) an electronic emergency braking code has been sent out by VH2, received by VH1 and signaled to a collision avoidance processor via a wireless communication link. Positive identification and authentication of the emergency signal is guaranteed by the intrinsic radar location / direction finding function of the system, which would help to avoid reaction to false or interference-type of signals.

In at least some embodiments, the apparatus 100 is used as retro-reflective pavement marker. Such a retro-reflective pavement marker comprises a cylindrical element 10 with a horizontally oriented axis A1 and it comprises at least one row of DPR elements 30. Fig. 20A shows a schematic perspective view of a cylindrical element 10 being mounted by a mounting block 315.

The cylindrical elements 10 of these kinds of pavement marker embodiments do not need to be gradient index lenses. The respective embodiments can be equipped with a cylindrical element being designed as dielectric lens, having an inner longitudinal axis and comprising a dielectric material with an effective dielectric constant so as to provide for a focusing of an incident electromagnetic wave onto a focus region.

In at least some embodiments, a retro-reflective pavement marker preferably comprises one, two or three columns of FDRA antenna arrays 20. Fig. 20B shows the schematic cross-section of a respective cylindrical element 10 which is equipped with three columns of FDRA antenna arrays 20. The respective antenna arrays 20 are depicted as rectangles. There might be a carrier, backplane or substrate 21 which is designed for carrying the antenna arrays 20 at a predetermined mutual (angular) distance.

In at least some embodiments, such a retro-reflective pavement marker comprises a cylindrical element which is not a gradient index lens.

In at least some embodiments, such retro-reflective pavement markers are designed so that the apparatus 100 provides for one or two short "blinks" of zero or significantly reduced RCS at different elevation angles. These "blinks" then would show up for the transceivers of approaching vehicles VH at different distances.

A similar apparatus 100 might also be used as retro-reflective device for specific (static) signaling purposes in an upright position next to a drive path DP, for example.

[000231] Reference numbers

| cylindrical element / lens | 10 |
|---|---|
| focus reqion / focal line | 11 |
| flat area | 12 |
| outer circumference / outer surface / cylinder-lens surface | 13 |
| end surface | 14 |
| layer or coatinq / outermost layer | 15 |
| | |
| antenna array / FDRA | 20 |
| carrier / backplane / substrate | 21 |
| front face | 22 |
| carrier | 23 |
| controllable/adjustable elements | 24 |
| | |
| antenna element / DPR element | 30, 30.1, 30.2, 30.3, 30.4, 30.5, 30.6 |
| transmissions lines / transmission line networks | 31, 31.1, 31.2, 31.3, 31.4, 31.5, 31.6, 31.N |
| ports | 32 |
| throuqh-hole / via-hole | 33 |
| optical axis | 34 |
| rinq-shaped element | 35 |
| cavity | 36 |

(continued)

| | |
|---|---|
| nose/stub | 37 |
| box | 38 |
| | |
| (spherical) lens element / coupling element | 40 |
| mounting element | 41 |
| | |
| (retro-directive) apparatus / retro-reflector | 100 |
| housing | 101 |
| window | 102 |
| | |
| overall system / radar system | 200 |
| radar transceiver | 201, 201.1, 201.2, 201.3, 202.4 |
| | |
| installation | 300 |
| post / pile / pole / rod | 301 |
| cutout / opening | 302 |
| mounting gear | 310 |
| end plates | 311 |
| rod, lever, wire | 312 |
| spring, elastic element, screw and nut | 313 |
| shaft / pin | 314 |
| mounting block | 315 |
| Overall system / communication system | 400 |
| radar transceiver / apparatus | 401.2 |
| radar transceiver / apparatus | 402.1 |
| | |
| axis / cylinder axis / center axis / central axis / (inner) longitudinal axis | A1 |
| (first) aperture / acceptance angle | $\beta_1$ |
| (second) effective aperture / effective acceptance angle | $\beta_2$ |
| speed of light | $C_0$ |
| depth | d |
| diameter | $D_c$ |
| drive path | DP |
| angular range | $\Delta$ |
| angle | $\delta$ |
| permittivity / dielectric constant | $\varepsilon_i(r)$ |
| cut-off frequency | $f_c$ |
| focal point | FP |
| focal line / linear focus region / focus line | FL |

(continued)

| focal region | FP, FL |
|---|---|
| dielectric constant | Emax |
| dielectric constant | $\varepsilon_{min}$ |
| wavelength | $\lambda$ |
| refractive index | n, n(r) |
| integer number | N |
| mutual distance | P |
| Curved arrow | P1, P2 |
| radius | r1 |
| radius | r1* |
| radar wave | R1, R2, R3, R4 |
| symmetry plane / symmetry line | SP1 |
| symmetry axis | Sym |
| delay | $\tau_1, \tau_2, \tau_3$ |
| vehicle / car / truck / bicycle | VH, VH1, VH2 |
| angle | W |
| coordinate system | x-y |

**Claims**

1. Apparatus (100) comprising

   - a cylindrical element (10) having an inner longitudinal axis (A1) and comprising a curved circumferential surface (22) for receiving an incident electromagnetic wave, and comprising a dielectric material with an effective dielectric constant ($\varepsilon_i$) so as to provide for a focusing of the incident electromagnetic wave onto a focus region (11, FP, FL), wherein the cylindrical element (10) is configured to cause the incident electromagnetic wave, after having been received via the curved circumferential surface (22), to travel more or less perpendicularly to the longitudinal axis (A1) through the cylindrical element (10); and
   - a retrodirective antenna array (20) comprising at least two antenna elements (30), said antenna array (20) being positioned with an orientation parallel to said axis (A1) at said focus region (11, FP, FL).

2. The apparatus (100) of claim 1, wherein said focus region (11, FP, FL) is inside or outside of said cylindrical element (10) or at a surface (13) of said cylindrical element (10).

3. The apparatus (100) of claim 1 or claim 2, wherein said retrodirective antenna array (20) is designed so that it is able to simultaneously receive and transmit radar waves.

4. The apparatus (100) of claim 3, wherein each of said antenna elements (30) comprises two ports (32) which have a 90 degrees angular distance so as to be able to simultaneously receive and transmit radar waves of two orthogonal polarization states.

5. The apparatus (100) of one of the preceding claims, wherein said cylindrical element (10) is

   - a classical cylinder,
   - a 3-dimensional body which resembles the shape of a cylinder,
   - an approximation of a cylinder,
   - a variation of a cylinder,
   - a modification of a cylinder,

- a subdivision of a classical cylinder or of a variation or of a modification of a cylinder,
- a segment of a classical cylinder or of a variation or of a modification of a cylinder.

6. The apparatus (100) of one of the preceding claims, wherein said dielectric material has an effective dielectric constant ($\varepsilon_i$) in a range of 2.2 through 4.5.

7. The apparatus (100) of one of the preceding claims 1 through 5, wherein said dielectric material has an effective dielectric constant ($\varepsilon_i$) which radially increases from an outer part of said cylindrical element (10) towards said axis (A1), so as to provide for the focusing of the incident electromagnetic wave at said focus region (11, FP, FL).

8. The apparatus (100) of one of the preceding claims 1 through 5 or 7, wherein said cylindrical element (10) is a lens which comprises a material at or close to its outer circumference which has an effective dielectric constant ($\varepsilon_{min}$) of at least 1.1, and a material at or close to the inner longitudinal axis (A1) which has an effective dielectric constant ($\varepsilon_{max}$) which fulfills the relation $\varepsilon_{max} \leq 1.9 * \varepsilon_{min}$.

9. The apparatus (100) of one of the preceding claims, wherein said cylindrical element (10) is designed so that

   - the focus region (11, FP, FL) has the shape of a linear focus region (FL) extending parallel to said axis (A1), and/or
   - it provides for an effective focal length which corresponds to a radius (r1) of said cylindrical element (10), or which corresponds to between half and twice the radius (r1) of said cylindrical element (10), and/or
   - it is provided with at least one flat area (12) extending parallel to said axis (A1), said flat area (12) being situated at the circumference of said cylindrical element (10).

10. The apparatus (100) of one of the preceding claims, wherein said antenna array (20) comprises at least two antenna elements (30) which are interconnected by transmission lines (31.N) so as to re-radiate electromagnetic radar waves received through said cylindrical element (10), and wherein preferably two-port radiators supporting orthogonal wave polarizations serve as antenna elements (30), and wherein said transmission lines (31.N) preferably have equal lengths.

11. The apparatus (100) of claim 10, wherein at least one of said transmission lines (31.N) comprises a controllable 2-port circuit (24) for amplitude- and/or phase-modulation of the radar signal.

12. The apparatus (100) of one of the preceding claims 1 through 11, wherein each of said antenna elements (30) comprises an electrically conductive planar ring structure (35), being dimensioned as resonant closed transmission line loop being excitable by an electromagnetic radar wave incident normal to its plane of extension, and wherein said ring structure (35) preferably is backed by a cavity (36) extending beyond the outer perimeter of said ring structure (35).

13. The apparatus (100) of one of the preceding claims, being designed for use as retro-reflector for electromagnetic radar waves and

   - wherein said cylindrical element (10) is positioned in an upright position with said central axis (A1) being vertically aligned, or
   - wherein said cylindrical element (10) is positioned in a horizontal position with said central axis (A1) being horizontally aligned, and/or
   - wherein said apparatus (100) has an effective acceptance angle ($\beta2$) between 2 and 120 degrees.

14. Radar system (200; 400) comprising

   - at least one vehicle-mounted radar transceiver (201.1, 201.2, 201.3) designed for emitting an electromagnetic radar wave,
   - at least one apparatus (100) according to one of the claims 1 through 13, being designed as a retrodirective antenna which reflects the electromagnetic radar wave towards said transceiver (201.1, 201.2, 201.3).

15. The Radar system (200) of claim 14, wherein said apparatus (100) is in a stationary position, and wherein said apparatus (100) is preferably mounted in or at

- a traffic or road sign,
- a post or pole (301),
- a guide rail,
- a crash barrier,
- a curbside,
- a road marking,
- a road construction site,
- a traffic light,
- a building.

16. The Radar system (200; 400) of claim 14, wherein said apparatus (100) is mounted in another vehicle (VH1, VH2) or in a moveable barrier.

**Patentansprüche**

1. Vorrichtung (100), umfassend:

   - ein zylindrisches Element (10) mit einer inneren Längsachse (A1) und einer gekrümmten Umfangsfläche (22) zum Empfang einer einfallenden elektromagnetischen Welle und umfassend ein dielektrisches Material mit einer effektiven Dielektrizitätskonstante ($\varepsilon_i$), um für ein Fokussieren der einfallenden elektromagnetischen Welle auf einen Fokusbereich (11, FP, FL) zu sorgen, worin das zylindrische Element (10) konfiguriert ist, um dafür zu sorgen, dass sich die einfallende elektromagnetische Welle, nachdem sie durch die gekrümmte Umfangsfläche (22) empfangen wurde, mehr oder weniger senkrecht zu der Längsachse (A1) durch das zylindrische Element (10) ausbreitet; und
   - ein retrodirektives Antennenarray (20), das mindestens zwei Antennenelemente (30) umfasst, wobei das Antennenarray (20) mit einer Ausrichtung parallel zu der Achse (A1) im Fokusbereich (11, FP, FL) positioniert ist.

2. Vorrichtung (100) nach Anspruch 1, worin der Fokusbereich (11, FP, FL) innerhalb oder außerhalb des zylindrischen Elements (10) oder an einer Oberfläche (13) des zylindrischen Elements (10) liegt.

3. Vorrichtung (100) nach Anspruch 1 oder Anspruch 2, wobei das retrodirektive Antennenarray (20) so ausgelegt ist, dass es gleichzeitig in der Lage ist Radarwellen zu empfangen und zu senden.

4. Vorrichtung (100) nach Anspruch 3, worin jedes der Antennenelemente (30) zwei Anschlüsse (32) umfasst, die einen Winkelabstand von 90 Grad haben, um in der Lage zu sein gleichzeitig Radarwellen zweier orthogonaler Polarisationszustände zu empfangen und zu senden.

5. Vorrichtung (100) nach einem der vorhergehenden Ansprüche, worin das zylindrische Element (10) ist

   - ein klassischer Zylinder,
   - ein dreidimensionaler Körper, welcher der Form eines Zylinders ähnelt,
   - eine Annäherung an einen Zylinder,
   - eine Variation eines Zylinders,
   - eine Modifikation eines Zylinders,
   - eine Unterteilung eines klassischen Zylinders oder einer Variation oder einer Modifikation eines Zylinders,
   - ein Segment eines klassischen Zylinders oder einer Variation oder Modifikation eines Zylinders.

6. Vorrichtung (100) nach einem der vorhergehenden Ansprüche, worin das dielektrische Material eine effektive Dielektrizitätskonstante ($\varepsilon_i$) im Bereich von 2,2 bis 4,5 aufweist.

7. Vorrichtung (100) nach einem der vorhergehenden Ansprüche 1 bis 5, worin das dielektrische Material eine effektive Dielektrizitätskonstante ($\varepsilon_i$) aufweist, die von einem äußeren Teil des zylindrischen Elements (10) zur Achse (A1) radial zunimmt, um für die Fokussierung der einfallenden elektromagnetischen Welle im Fokusbereich (11, FP, FL) zu sorgen.

8. Vorrichtung (100) nach einem der vorhergehenden Ansprüche 1 bis 5 oder 7, worin das zylindrische Element (10) eine Linse ist, die an oder nahe ihrem Außenumfang ein Material aufweist, das eine effektive Dielektrizitätskonstante

($_{\varepsilon min}$) von mindestens 1,1 aufweist und ein Material an oder nahe der inneren Längsachse (A1), das eine effektive Dielektrizitätskonstante ($\varepsilon_{max}$) aufweist, welche die Beziehung $\varepsilon_{max} \leq 1,9 * \varepsilon_{min}$ erfüllt.

9. Vorrichtung (100) nach einem der vorhergehenden Ansprüche, worin das zylindrische Element (10) so gestaltet ist, dass

   - der Fokusbereich (11, FP, FL) die Form eines linearen Fokusbereichs (FL) aufweist, der sich parallel zu der Achse (A1) erstreckt, und/oder
   - es für eine effektive Brennweite sorgt, die einem Radius (r1) des zylindrischen Elements (10) entspricht oder die zwischen dem halben und dem doppelten Radius (r1) des zylindrischen Elements (10) entspricht, und/oder
   - es mit mindestens einem flachen Bereich (12) versehen ist, der sich parallel zur Achse (A1) erstreckt, wobei der flache Bereich (12) am Umfang des zylindrischen Elements (10) liegt.

10. Vorrichtung (100) nach einem der vorhergehenden Ansprüche, worin das Antennenarray (20) mindestens zwei Antennenelemente (30) umfasst, die durch Übertragungsleitungen (31.N) miteinander verbunden sind, um elektromagnetische Radarwellen wieder abzustrahlen, die durch das zylindrische Element (10) empfangen wurden, und worin vorzugsweise Zweitorstrahler, die eine orthogonale Wellenpolarisationen unterstützen, als Antennenelemente (30) dienen, und wobei die Übertragungsleitungen (31.N) vorzugsweise gleiche Längen haben.

11. Vorrichtung (100) nach Anspruch 10, worin mindestens eine der Übertragungsleitungen (31.N) eine steuerbare 2-Tor-Schaltung (24) zur Amplituden- und/oder Phasenmodulation des Radarsignals umfasst.

12. Vorrichtung (100) nach einem der vorhergehenden Ansprüche 1 bis 11, worin jedes der Antennenelemente (30) eine elektrisch leitende planare Ringstruktur (35) umfasst, die als resonante geschlossene Übertragungsleitungsschleife dimensioniert ist, die durch eine elektromagnetische Radarwelle erregt werden kann, welche senkrecht zu ihrer Ausbreitungsebene einfällt, und wobei die Ringstruktur (35) vorzugsweise von einem Hohlraum (36) unterbaut ist, der sich über den Außenumfang der Ringstruktur (35) hinaus erstreckt.

13. Vorrichtung (100) nach einem der vorangehenden Ansprüche, ausgelegt zur Verwendung als Retroreflektor für elektromagnetische Radarwellen und

    - wobei das zylindrische Element (10) in einer aufrechten Position positioniert ist, wobei die Mittelachse (A1) vertikal ausgerichtet ist, oder
    - wobei das zylindrische Element (10) in einer horizontalen Position positioniert ist, wobei die Mittelachse (A1) horizontal ausgerichtet ist, und/oder
    - wobei die Vorrichtung (100) einen effektiven Akzeptanzwinkel (β2) zwischen 2 und 120 Grad aufweist.

14. Radarsystem (200; 400) umfassend

    - mindestens einen fahrzeugmontierten Radar-Transceiver (201.1, 201.2, 201.3), der zum Aussenden einer elektromagnetischen Radarwelle ausgelegt ist,
    - mindestens eine Vorrichtung (100) nach einem der Ansprüche 1 bis 13, die als retrodirektive Antenne ausgebildet ist, welche die elektromagnetische Radarwelle in Richtung des Transceivers (201.1, 201.2, 201.3) reflektiert.

15. Das Radarsystem (200) nach Anspruch 14, worin sich die Vorrichtung (100) in einer stationären Position befindet und wobei die Vorrichtung (100) vorzugsweise in oder an

    - einem Verkehrs- oder Straßenschild,
    - einem Pfosten oder einer Stange (301),
    - einer Führungsschiene,
    - einer Leitplanke,
    - einer Bordsteinkante,
    - einer Straßenmarkierung,
    - einer Straßenbaustelle,
    - einer Ampel,
    - einem Gebäude

montiert ist.

16. Das Radarsystem (200; 400) nach Anspruch 14, worin die Vorrichtung (100) in einem anderen Fahrzeug (VH1, VH2) oder in einer beweglichen Barriere montiert ist.

**Revendications**

1. Appareil (100) comprenant

   - un élément cylindrique (10) ayant un axe longitudinal intérieur (A1) et comprenant une surface circonférentielle incurvée (22) destinée à recevoir une onde électromagnétique incidente, et comprenant un matériau diélectrique avec une constante diélectrique effective ($\varepsilon_i$) de façon à permettre une focalisation de l'onde électromagnétique incidente sur une région focale (11, FP, FL), l'élément cylindrique (10) étant configuré pour obliger l'onde électromagnétique incidente, après réception via la surface circonférentielle incurvée (22), à traverser l'élément cylindrique (10) de façon plus ou moins perpendiculaire à l'axe longitudinal (A1); et
   - un réseau d'antennes rétrodirectif (20) comprenant au moins deux éléments d'antenne (30), ledit réseau d'antennes (20) étant positionné avec une orientation parallèle audit axe (A1) au niveau de ladite région focale (11, FP, FL).

2. Appareil (100) selon la revendication 1, dans lequel ladite région focale (11, FP, FL) est à l'intérieur ou à l'extérieur dudit élément cylindrique (10) ou au niveau d'une surface (13) dudit élément cylindrique (10).

3. Appareil (100) selon la revendication 1 ou 2, dans lequel ledit réseau d'antennes rétrodirectif (20) est conçu de façon à pouvoir recevoir et transmettre simultanément des ondes radar.

4. Appareil (100) selon la revendication 3, dans lequel chacun desdits éléments d'antenne (30) comprend deux ports (32) présentant une distance angulaire de 90 degrés de façon à pouvoir recevoir et transmettre simultanément des ondes radar de deux états de polarisation orthogonaux.

5. Appareil (100) selon l'une des revendications précédentes, dans lequel ledit élément cylindrique (10) est

   - un cylindre classique,
   - un corps en 3 dimensions ressemblant à la forme d'un cylindre,
   - une approximation d'un cylindre,
   - une variation d'un cylindre,
   - une modification d'un cylindre,
   - une subdivision d'un cylindre classique ou d'une variation ou d'une modification d'un cylindre,
   - un segment d'un cylindre classique ou d'une variation ou d'une modification d'un cylindre.

6. Appareil (100) selon l'une des revendications précédentes, dans lequel ledit matériau diélectrique présente une constante diélectrique effective ($\varepsilon_i$) dans une plage allant de 2,2 à 4,5.

7. Appareil (100) selon l'une des revendications 1 à 5, dans lequel ledit matériau diélectrique présente une constante diélectrique effective ($\varepsilon_i$) qui augmente radialement depuis une partie extérieure dudit élément cylindrique (10) vers ledit axe (A1) de façon à pouvoir focaliser l'onde électromagnétique incidente au niveau de ladite région focale (11, FP, FL).

8. Appareil (100) selon l'une des revendications 1 à 5 ou 7, dans lequel ledit élément cylindrique (10) est une lentille qui comprend un matériau au niveau de ou à proximité de sa circonférence extérieure présentant une constante diélectrique effective ($\varepsilon_{min}$) d'au moins 1,1, et un matériau au niveau de ou à proximité de l'axe longitudinal intérieur (A1) présentant une constante diélectrique effective ($\varepsilon_{max}$) qui remplit la relation $\varepsilon_{max} \leq 1,9 * \varepsilon_{min}$.

9. Appareil (100) selon l'une des revendications précédentes, dans lequel ledit élément cylindrique (10) est conçu de telle sorte que

   - la région focale (11, FP, FL) a la forme d'une région focale linéaire (FL) s'étendant parallèlement audit axe (A1), et/ou

- il fournit une longueur focale effective qui correspond au rayon (r1) dudit élément cylindrique (10), ou qui correspond à entre la moitié et deux fois le rayon (r1) dudit élément cylindrique (10), et/ou
- il est fourni avec au moins une zone plate (12) s'étendant parallèlement audit axe (A1), ladite zone plate (12) étant située sur la circonférence dudit élément cylindrique (10).

10. Appareil (100) selon l'une des revendications précédentes, dans lequel ledit réseau d'antennes (20) comprend au moins deux éléments d'antenne (30) qui sont interconnectés par des lignes de transmission (31.N) de façon à réémettre les ondes radar électromagnétiques reçues via ledit élément cylindrique (10), et dans lequel de préférence des radiateurs à deux ports supportant des polarisations d'onde orthogonales servent d'éléments d'antenne (30), et dans lequel lesdites lignes de transmission (31.N) ont de préférence des longueurs égales.

11. Appareil (100) selon la revendication 10, dans lequel au moins l'une desdites lignes de transmission (31.N) comprend un circuit à deux ports commandable (24) pour moduler en amplitude et/ou en phase le signal radar.

12. Appareil (100) selon l'une des revendications 1 à 11, dans lequel chacun desdits éléments d'antenne (30) comprend une structure annulaire planaire électriquement conductrice (35), dimensionnée comme un circuit fermé résonant de ligne de transmission pouvant être excité par une onde radar électromagnétique incident normalement par rapport à son plan d'extension, et dans lequel ladite structure annulaire (35) est de préférence soutenue par une cavité (36) s'étendant au-delà du périmètre extérieur de ladite structure annulaire (35).

13. Appareil (100) selon l'une des revendications précédentes, conçu pour être utilisé comme rétro-réflecteur pour les ondes radar électromagnétiques et

- dans lequel ledit élément cylindrique (10) est positionné verticalement avec ledit axe central (A1) aligné verticalement, ou
- dans lequel ledit élément cylindrique (10) est positionné horizontalement avec ledit axe central (A1) aligné horizontalement, et/ou
- dans lequel ledit appareil (100) a un angle d'acceptation effectif (β2) compris entre 2 et 120 degrés.

14. Système radar (200 ; 400) comprenant

- au moins un émetteur-récepteur radar embarqué dans le véhicule (201.1, 201.2, 201.3) conçu pour émettre une onde radar électromagnétique,
- au moins un appareil (100) selon l'une des revendications 1 à 13, conçu comme une antenne rétrodirective qui renvoie l'onde radar électromagnétique vers ledit émetteur-récepteur (201.1, 201.2, 201.3).

15. Système radar (200) selon la revendication 14, dans lequel ledit appareil (100) est en position fixe, et dans lequel ledit appareil (100) est de préférence monté dans ou au niveau

- d'un panneau de signalisation ou d'un panneau routier,
- d'un poteau ou d'une borne (301),
- d'une glissière,
- d'une barrière de sécurité,
- d'une bordure de trottoir,
- d'un marquage routier,
- d'un chantier de construction routière,
- d'un feu de signalisation,
- d'un bâtiment.

16. Système radar (200 ; 400) selon la revendication 14, dans lequel ledit appareil (100) est monté dans un autre véhicule (VH1, VH2) ou dans une barrière amovible.

A1

10

**Fig. 1A**

10

A1

**Fig. 1B**

10   A1

**Fig. 1C**

A1

10

**Fig. 2A**

10

A1

**Fig. 2B**

10   A1

**Fig. 2C**

A1

10

**Fig. 2D**

10

A1

**Fig. 2E**

10   A1

**Fig. 2F**

A1

10

**Fig. 2G**

10

A1

**Fig. 2H**

10   A1

**Fig. 2I**

**Fig. 2J**      **Fig. 2K**      **Fig. 2L**

**Fig. 2M**      **Fig. 2N**      **Fig. 2O**

**Fig. 2P**      **Fig. 2Q**      **Fig. 2R**

**Fig. 2S**      **Fig. 2T**      **Fig. 2U**

**Fig. 3A**

**Fig. 3B**

**Fig. 4A**

**Fig. 4B**

A1

10

**Fig. 5A**

x

y

FP

**Fig. 5B**

10

A1

**Fig. 6**

**Fig. 7A**

**Fig. 7B**

30

32
37
Sym
32 35

Fig. 8A

38

30

37
32
Sym
35
32

Fig. 8B

38

32 30
Sym
32

37 35

Fig. 8C

38

Fig. 9A

Fig. 9B

Fig. 9C

SP1

20

30.4

31.1

30.2

31.3

$\tau_1$

$\tau_1$

31.4

31.2

$\tau_1$

30.1 $\tau_1$

30.3

**Fig. 10A**

Fig. 10B

Fig. 11A

Fig. 11B

**Fig. 12A**

20

**Fig. 12B**

**Fig. 13**

Fig. 14A

Fig. 14B

Fig. 15

**Fig. 16**

300

20
10
302
311
312
313
22
21/23
311
100
310
301

**Fig. 17A**

100/300

A1
314
10

**Fig. 17B**

300

100

301

**Fig. 18A**

300

A1

310

101

102

310

301

**Fig. 18B**

Fig. 19A

Fig. 19B

**100**

**10**

A1

β₂

$r1$

$r1^*$

**13**

**20**

**21**

**Fig. 20B**

**100**

**10**

A1

**315**

**Fig. 20A**

**Fig. 21**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5424737 A
- US 5223839 A

**Non-patent literature cited in the description**

- **A. VORONOV et al.** Radar reflecting pavement markers for vehicle automation. Trafikverket, Borlänge, 2016
- **C. A. HACKING et al.** Study and applications of retrodirective and self-adaptive electromagnetic wave controls to a Mars probe. *Stanford Research Institute,* February 1966
- **J. BOR et al.** Foam Based Luneburg Lens Antenna at 60 GHz. *Progress In Electromagnetics Research Letters,* 2014, vol. 44, 1-7